(19) Europäisches Patentamt
European Patent Office
Office européen des brevets

(11) **EP 3 005 048 B1**

(12) **EUROPEAN PATENT SPECIFICATION**

(45) Date of publication and mention
of the grant of the patent:
**06.11.2019 Bulletin 2019/45**

(51) Int Cl.:
***G06F 3/042*** *(2006.01)*

(21) Application number: **14808092.2**

(22) Date of filing: **03.06.2014**

(86) International application number:
**PCT/US2014/040579**

(87) International publication number:
**WO 2014/197404 (11.12.2014 Gazette 2014/50)**

(54) **OPTICAL TOUCH SCREENS**

OPTISCHE BERÜHRUNGSBILDSCHIRME

ÉCRANS TACTILES OPTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.06.2013 US 201361830671 P
10.06.2013 US 201361833161 P
04.12.2013 US 201361911915 P
22.12.2013 US 201361919759 P
06.01.2014 US 201461923775 P
11.03.2014 US 201461950868 P**

(43) Date of publication of application:
**13.04.2016 Bulletin 2016/15**

(73) Proprietor: **Neonode Inc.
San Jose CA 95134 (US)**

(72) Inventors:
• **PETTERSSON, Robert**
**S-141 68 Huddinge (SE)**
• **ROSENGREN, Per**
**S-187 73 Täby (SE)**
• **ROSENGREN, Erik**
**S-114 23 Stockholm (SE)**
• **HOLMGREN, Stefan**
**S-192 72 Sollentuna (SE)**
• **SPARF, Lars**
**S-162 45 Vallingby (SE)**
• **BERGLIND, Richard**
**S-125 58 Älvsjö (SE)**
• **ERIKSSON, Thomas**
**S-114 32 Stockholm (SE)**
• **NORDSTRÖM, Karl, Erik, Patrik**
**S-141 41 Huddinge (SE)**
• **FRÖJDH, Gunnar, Martin**
**S-137 71 Dalaro (SE)**
• **WANG, Xiatao**
**S-112 15 Stockholm (SE)**
• **BEHDASHT, Remo**
**NL-7339 EZ Ugchelen (NL)**

(74) Representative: **Lavoix
Bayerstrasse 83
80335 München (DE)**

(56) References cited:
US-A1- 2008 278 460    US-A1- 2009 153 519
US-A1- 2010 289 755    US-A1- 2011 116 104
US-A1- 2011 169 780    US-A1- 2012 050 226
US-A1- 2012 176 343    US-A1- 2012 188 206
US-A1- 2013 021 302    US-A1- 2013 127 788
US-A1- 2013 135 259

**Description**

FIELD OF THE INVENTION

The field of the present invention is light-based touch screens.

BACKGROUND OF THE INVENTION

Many consumer electronic devices are now being built with touch sensitive surfaces (track pad or touch screen), for use with finger or stylus touch user inputs. These devices range from small screen devices such as mobile phones and car entertainment systems, to mid-size screen devices such as notebook computers, to large screen devices such as check-in stations at airports.

In computing, multi-touch refers to a touch sensing surface's ability to recognize the presence of two or more points of contact with the surface. This plural-point awareness is often used to implement advanced functionality such as pinch to zoom or activating predefined programs (Wikipedia, "*multi-touch*"). The Windows 8 operating system from Microsoft Corporation requires a touch screen supporting a minimum of 5-point digitizers. WINDOWS® is a registered trademark of Microsoft Corporation.

The present invention relates to light-based touch sensitive surfaces. Light-based touch sensitive surfaces surround the surface borders with light emitters and light detectors to create a light beam grid above the surface. An object touching the surface blocks a corresponding portion of the beams.

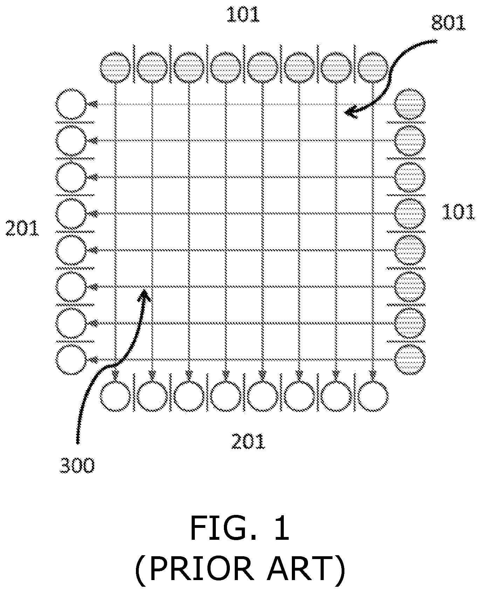

Reference is made to **FIG. 1,** which is a diagram of a prior art, light-based touch screen having 16 LEDs and 16 PDs. Screen **801** in **FIG. 1** is surrounded by emitters **101** along two edges and photodiode (PD) receivers **201** along the remaining two edges, which together enable a lattice of light beams **300** covering the screen.

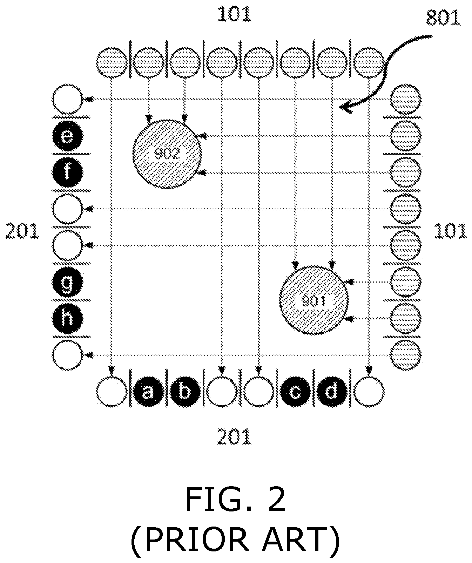

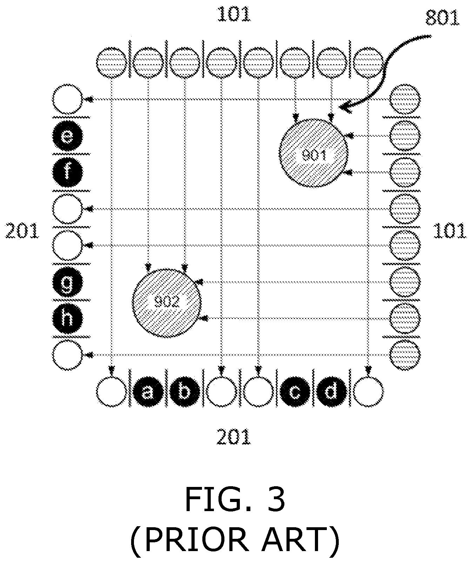

Light-based touch detection systems are unable to accurately recognize many instances of two or more points of contact with the surface. Reference is made to **FIGS. 2** and **3,** which are illustrations of instances of ambiguous multi-touch detections in prior art touch screens. **FIGS. 2** and **3** show different instances of two, diagonally opposed touches **901** and **902** that are ambiguous vis-à-vis the light grid of **FIG. 1.** As shown in **FIGS. 2** and **3,** the same light beams are blocked in both instances.

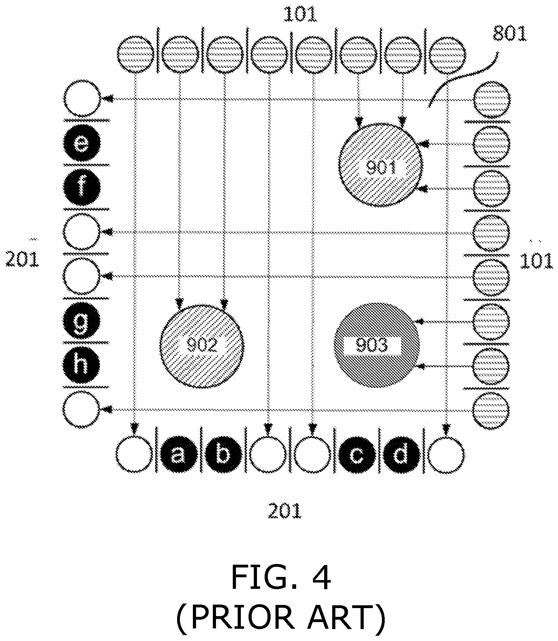

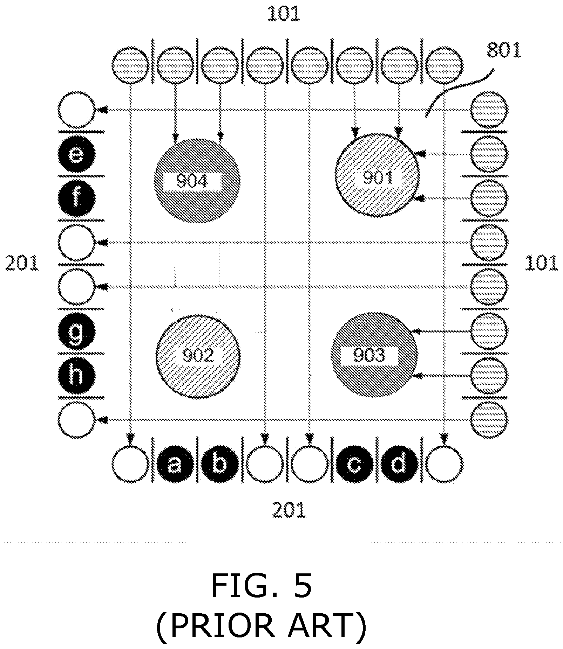

There is further ambiguity when more than two objects touch the screen simultaneously. Reference is made to **FIGS. 4** and **5,** which are illustrations of instances of ghosted touches in prior art touch screens. The two-touch cases shown in **FIGS. 2** and **3** are also ambiguous vis-à-vis the three-touch case, **901** - **903,** shown in **FIG. 4,** and vis-à-vis the four-touch case, **901** - **904,** shown in **FIG. 5.** In each of the cases illustrated in **FIGS. 2 - 5,** row and column PDs **a - h** show an absence of light in the same locations. The ambiguity illustrated in **FIGS. 4** and **5** is caused by "*ghosting*", which refers to an effect where the shadow of a first object obscures a second object and prevents the second object from being detected.

Light-based touch screens have many advantages over other touch sensor technologies such as capacitive and resistive solutions. Inter alia, light-based touch screens enable lower bill-of-materials cost than capacitive solutions, especially for large screens. Light-based touch screens are also superior to capacitive and resistive solutions in that a light-based touch screen does not require an additional physical layer on top of the screen that impairs the screen image. This is an important advantage for devices employing reflective screens where the brightness of the screen image depends on reflected light, rather than a backlight. Reference is made to US Patent No. 8,674,966 for ASIC CONTROLLER FOR A LIGHT-BASED TOUCH SCREEN, which teaches faster scan rates for light-based touch screens than are available using prior art capacitive screens. It would be advantageous to provide a light-based touch screen that is operative to detect multi-touch gestures and that is compatible with the requirements of the Windows 8 operating system.

One drawback of prior art light-based touch screens is the need to accommodate the numerous light emitters and light detectors along all four edges of the screen. This requirement makes it difficult to insert light-based touch detection into an existing electronic device without significantly changing the layout of the device's internal components. It would be advantageous to reduce the number of components required and to enable placing them in a limited area rather than surrounding the entire screen. Reducing the total number of light emitters and light detectors required has the added benefit of reducing the bill-of-materials (BOM).

U.S. Publication No. 2012/0188206 A1 discusses a lens for refracting light in three directions, including a lens surface having a repetitive pattern of recessed cavities formed by a repetitive pattern of three substantially planar facets.

SUMMARY

There is provided in accordance with an embodiment of the present invention a lens for placement opposite a diode in an optical touch sensor, including an upper portion including an upper refractive surface located nearer to the diode, and an upper reflector located further from the diode, the upper reflector being curved in two dimensions and cut horizontally by a top horizontal plane of the lens, and a lower portion, coplanar with the diode, including a lower refractive surface located nearer to the diode, and a lower reflector located further from the diode, the lower reflector being curved in the two dimensions and cut horizontally by a bottom horizontal plane of the lens, wherein the upper and the lower reflector are symmetrical and vertically aligned, and wherein non-collimated light reflected by the lower reflector onto the upper reflector is partially collimated in the two dimensions by the lower reflector and further collimated in the two dimensions by the upper reflector. There is provided in accordance with an embodiment of the present invention a lens according to claim 1.

In cases where the lens' viewing angle of the diode is large, the height of the lens between the top and bottom horizontal planes is less than the height required for a curved reflector, cut vertically by a rear vertical backplane of the lens, to partially collimate and further collimate the non-collimated light.

BRIEF DESCRIPTION OF THE DRAWINGS

The present invention will be more fully understood and appreciated from the following detailed description, taken in conjunction with the drawings in which:

FIG. 1 is a diagram of a prior art, light-based touch screen having 16 LEDs and 16 PDs;
FIGS. 2 and 3 are illustrations of instances of ambiguous multi-touch detections in prior art touch screens;
FIGS. 4 and 5 are illustrations of instances of ghosted touches in prior art touch screens;
FIG. 6 is an illustration of a network of intersecting light beams in a touch screen system;
FIG. 7 is an illustration of a network of intersecting light beams detecting five touch points in a touch screen system;
FIG. 8 is a flow chart describing a first method for identifying touch locations;
FIG. 9 is a flow chart describing a second method for identifying touch locations;
FIG. 10 is an illustration of neighboring intersections used by the method of FIG. 9;
FIG. 11 is an illustration of a network of connected blocked beams used to locate a touch object;
FIG. 12 is an illustration of five identified touch objects identified by a touch screen;
FIGS. 13 - 18 are illustrations of an alternative method for determining touch locations, whereby portions of a large, candidate touch area are excluded based on unblocked thin light beams;
FIG. 19 is an illustration of five circles indicating areas though which no beams pass due to touch objects;
FIG. 20 is a graph tracking the number of separate touch candidate areas as a function of the number of unblocked beams;
FIGS. 21 and 22 are simplified illustrations of a partially blocked wide beam, that illustrate effects of where a blocking object is placed;
FIG. 23 is a simplified exemplary illustration of iso-curves across the width of a wide light beam;
FIGS. 24 - 30 are simplified illustrations of a method of touch location determination, whereby portions of a large, candidate touch area are excluded based on unblocked, and partially blocked, wide light beams;
FIG. 31 is a simplified illustration of a partially blocked wide beam that extends between two adjacent screen edges;
FIGS. 32 - 34 are simplified drawings of an object being detected utilizing wide light beams;
FIG. 35 is a flowchart for a method of eliminating ghost touches;
FIG. 36 is a simplified drawing of a lens that distributes beams across many angles;
FIG. 37 is a simplified figure of four different fields of view that are all focused on a single diode;
FIG. 38 is a simplified illustration of the four fields of view of FIG. 37 as viewed from above;
FIGS. 39 and 40 are simplified illustrations of two beams from one emitter to two respective PDs;
FIGS. 41 - 43 are simplified illustrations of an arrangement of components, light guides, PCB and screen in a device;
FIGS. 44 and 45 are simplified illustrations of a light guide;
FIG. 46 is a simplified illustration of how microstructures correct the problem of gaps in the light field, in the light guide of FIGS. 44 and 45;
FIGS. 47 - 49 are simplified illustrations of light guides;
FIG. 50 is a simplified illustration of a light intensity distribution across the width of a wide light beam;
FIG. 51 is a simplified illustration comparing light intensity distribution across the width of an un-reflected wide light beam with that of a wide beam that has passed through the light guide of FIGS. 44 and 45;
FIGS. 52 - 54 are simplified illustrations of a light guide, in accordance with an embodiment of the present invention;
FIG. 55 is a prior art illustration of a light guide;
FIG. 56 is a simplified illustration of a light guide, in accordance with an embodiment of the present invention;
FIGS. 57 and 58 are simplified illustrations of a light guide arrangement for detecting touches and sweep gestures performed upon the light guide;
FIG. 59 is a simplified illustration of a touch screen having a row of emitters along the bottom edge of the screen and a row of receivers among the top edge of the screen;

**FIG. 60** is a simplified illustration of the touchscreen of **FIG. 59;**

**FIG. 61** is an exploded view of the touchscreen of **FIGS. 59** and 60;

**FIG. 62** is a simplified illustration of a touchscreen having a row of emitters along the bottom edge of the screen mounted on a first thin strip PCB and a row of receivers along the top edge of the screen mounted on a second thin strip PCB;

**FIG. 63** is an exploded view of the touchscreen of **FIG. 62;**

**FIG. 64** is a simplified illustration of a foldable touchscreen;

**FIG. 65** is a simplified illustration of a second foldable touchscreen;

**FIG. 66** is a simplified illustration of light beams from one emitter reaching all of the detectors;

**FIG. 67** is a simplified illustration showing which beams from **FIG. 66** are blocked by an object touching the center of the screen;

**FIG. 68** is a simplified illustration showing additional beams from other emitters that are not blocked by the object of **FIG. 67;**

**FIG. 69** is a simplified illustration showing all of the beams blocked by the object of **FIG. 67;**

**FIGS. 70** - **73** are illustrations of alternative LED and PD layouts for a circular touch surface;

**FIG. 74** is an illustration of a light guide for a circular touch surface;

**FIG. 75** is an illustration of a PCB layout for a circular touch surface;

**FIG. 76** is an illustration of light beams emitted by one LED detected by a plurality of PDs surrounding a circular touch surface;

**FIG. 77** is an illustration of a network of intersecting light beams used in a circular touch surface;

**FIG. 78** is a simplified illustration of a circular touch surface sensor;

**FIG. 79** is an illustration of the components used to assemble a circular touch surface;

**FIG. 80** is an exploded view of the circular touch surface of **FIG. 78;**

**FIG. 81** is a cutaway view of the circular touch surface of **FIG. 7;**

**FIG. 82** is a simplified illustration of a light guide for the circular touch surface of **FIG. 78;** and

**FIGS. 83** and **84** are illustrations of paths of light beams used in a circular touch surface.

The following table catalogues the numbered elements and lists the figures in which each numbered element appears. Similarly numbered elements represent elements of the same type, but they need not be identical elements.

| Numbered Elements | | |
|---|---|---|
| | | |
| **Element** | **Description** | **Figures** |
| **101-103** | emitters | **1 - 7, 32 - 34, 40,- 42, 57, 58** |
| **104** | LED chip | **36, 38** |
| **105** | plastic shell | **36, 38** |
| **106 - 111** | emitter | **21, 22, 31, 39, 44 - 58, 61, 63, 66 - 69, 83, 84** |
| **201 - 203, 205 - 207** | photodetector | **1 - 7, 21, 22, 31 - 34, 39, 40, 50, 57, 61, 63, 66 - 69** |
| **210** | photodetector chip | **43** |
| **211** | plastic shell | **43** |
| **220** | photodetector | **83** |
| **300 - 306** | light beam | **1, 10, 14, 15** |
| **307, 308** | blocked light beam | **17,18** |
| **311 - 314** | intersection point | **10** |
| **316 - 319** | area q | **30** |
| **320 - 326** | light beam | **21 - 26, 30, 31, 39, 40, 57, 58** |
| **327** | iso-curve | **24, 26** |
| **328** | area q | **24, 26** |
| **330** | iso-curve | **25, 26** |

(continued)

| Numbered Elements | | |
| --- | --- | --- |
| Element | Description | Figures |
| 331 | area q | 25, 26 |
| 332 - 335 | light beam | 27 - 30, 76, 83, 84 |
| 336 | iso-curve | 27, 29 |
| 337 | area q | 27, 29 |
| 338 | iso-curve | 28, 29 |
| 339 | area q | 28, 29 |
| 341 | light beam | 44, 45 |
| 342 | gap | 45 |
| 343 - 348, 354 | light beam | 44 - 48, 50 |
| 355 - 359 | light intensity distribution | 50, 51 |
| 360 | light beams | 59, 66 - 68 |
| 400 | lens | 36 |
| 401 | entry surface | 36, 38, 42, 43 |
| 402 | exit surface | 36, 38 |
| 403 - 407 | lens | 21, 22, 31, 39, 50 |
| 410 | light guide frame | 40, 57 |
| 411, 412, 416 | light guide | 41 - 46, 49, 51, 58 |
| 417 | radius | 46 |
| 419 | viewing angle | 46 |
| 420 | refractive surface | 45, 46 |
| 421 | reflective surface | 45, 46 |
| 422 | refractive surface | 45, 46 |
| 423 | lens | 45, 46 |
| 424 | light guide | 77 - 83 |
| 425 | light shield | 82 |
| 429 | light guide | 47 |
| 430 | entry surface | 47 |
| 431 | exit surface | 47 |
| 432 | air gap | 47 |
| 433 | lens | 47 |
| 440 | light guide | 48 |
| 441 | reflective surface | 48 |
| 442 | refractive surface | 48 |
| 443 | air gap | 48 |
| 444 | lens | 48 |
| 451 | curved mirror | 49 |

(continued)

| Numbered Elements | | |
|---|---|---|
| Element | Description | Figures |
| 452 | light guide | 49 |
| 460 | lens | 52 - 54, 56 |
| 461 | curved reflective surface | 52, 54 |
| 462 | curved reflective surface | 52, 54 |
| 463 | entry surface | 52 - 54 |
| 464 | exit surface | 52 - 54 |
| 465 | light beam | 53, 54 |
| 466 | upper lens portion | 52, 54 |
| 467 | lower lens portion | 52, 54 |
| 470 | light guide | 55 |
| 471 | curved reflective surface | 55 |
| 472 | height of parabola | 55 |
| 473 | reflector | 55 |
| 474 | bezel height | 55 |
| 476 | height for light channel | 55 |
| 478 | height | 55 |
| 479, 480 | light guide | 59 - 65 |
| 481 | backplane of light guide | 55 |
| 482 | depth of parabola | 52 |
| 483 | top horizontal plane | 52, 54 |
| 484 | bottom horizontal plane | 52, 54 |
| 601 - 605 | step in flowchart | 8 |
| 612 - 614 | screenshot | 8 |
| 615 - 619 | touch point | 8, 19, 32 - 34 |
| 620 - 624 | step in flowchart | 9 |
| 630 | screenshot | 9 |
| 633 - 636 | light beam | 9 |
| 637 - 639 | intersection point | 9 |
| 640 | screenshot | 9 |
| 641 - 643 | light beam | 9 |
| 645 - 647 | intersection point | 9 |
| 650 | screenshot | 9 |
| 651 | circle indicating touch area | 9, 11 |
| 652 | PCB | 41 - 43, 58 |
| 653 - 656 | candidate touch area (q) | 13 - 18 |
| 657 - 659 | PCB | 60, 61, 63 |

(continued)

| | Numbered Elements | |
|---|---|---|
| **Element** | **Description** | **Figures** |
| **660** | screenshot | **9** |
| **661** | pcb | **75, 79 - 81, 83** |
| **664 - 671** | step in flowchart | **35** |
| **701 - 705** | touch point | **12** |
| **710** | controller | **7** |
| **711** | calculating unit | **57** |
| **715** | processor | **75** |
| **801 - 803** | screen | **1 - 5, 13 - 19, 21, 22, 24 - 28, 32 - 34, 41 - 43, 49, 50, 58 - 68** |
| **804** | crease | **64, 65** |
| **810** | touch plate | **78 - 81, 83** |
| **811** | top cover | **78 - 81** |
| **812** | bottom cover | **78 - 81** |
| **900** | arrow | **58** |
| **901 - 904** | touch point | **2 - 5** |
| **905** | touch object | **21, 22, 31** |
| **906** | rhomboid intersection area | **33** |
| **910** | touch object | **67 - 69** |
| **911** | screw | **79 - 81** |
| **912** | wire | **78 - 80** |
| **913** | haptic vibrator | **79, 80** |

## DETAILED DESCRIPTION

Aspects of the present invention relate to light-based touch screens and light-based touch surfaces. Throughout this specification, the terms "*touch screen"* and "*touch sensitive surface"* include touch sensitive electronic displays and touch surfaces that do not include an electronic display, inter alia, a mouse touchpad as included in many laptop computers and the back cover of a handheld device. They also include airspace enclosed by a rectangular emitter-detector sensor frame.

A light-based touch sensor includes a plurality of infra-red or near infra-red light-emitting diodes (LEDs) arranged along two adjacent edges of a rectangular touch sensitive surface, as defined above, and a plurality of photodiodes (PDs) arranged along the two remaining adjacent edges. The LEDs project light collimated in height, in order to keep it parallel to the screen surface, but the light is spread out in a wide fan to reach many detectors. When this light is blocked by an inserted object, such as a finger or a stylus, the absence of expected light is detected by the PDs. The LEDs and PDs are controlled for selective activation and de-activation by a controller. Generally, each LED and PD has I/O connectors, and signals are transmitted to specify which LEDs and which PDs are activated. In some examples, each LED-PD pair is activated separately. In other examples, several PDs are activated concurrently during an LED activation.

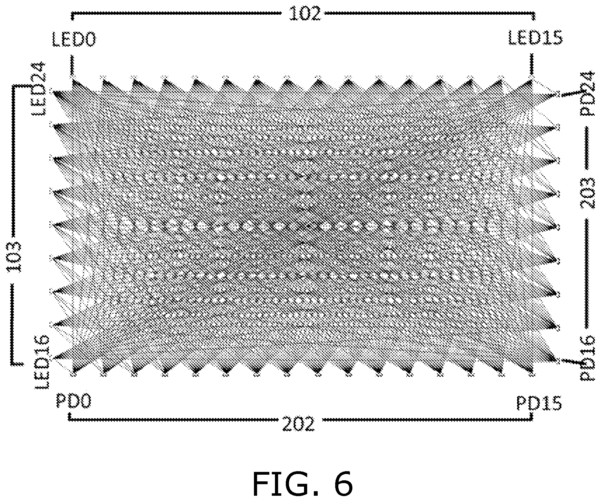

Reference is made to **FIG. 6,** which is an illustration of a network of intersecting light beams in a touch screen system. **FIG. 6** shows a first plurality of LEDs **102,** namely **LEDO** - **LED15** along the top edge of a touch screen; a second plurality of LEDs **103,** namely **LED16** - **LED24** along the left edge of the touch screen; a first plurality of PDs **202,** namely **PDO** - **PD15** along the bottom edge of the screen; and a second plurality of PDs **203,** namely **PD16** - **PD24** along the right edge of the touch screen. **FIG. 6** also illustrates all of the possible emitter-detector beams.

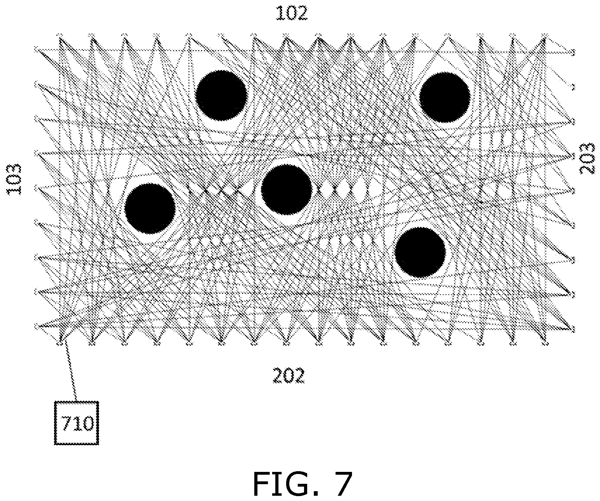

Reference is made to **FIG. 7**, which is an illustration of a network of intersecting light beams detecting five touch points in a touch screen system. **FIG. 7** shows the touch screen system of **FIG. 6** detecting five touches. The touches are indicated as solid black circles. The lines crossing the screen in **FIG. 7** indicate unblocked emitter-detector beams. A controller **710** is shown for controlling activations of the emitters and detectors.

Each emitter has a respective collimating lens apart from the emitter, and each detector has a respective collimating lens apart from the detector. In some examples, these collimating lenses form a solid plastic frame along the borders of the rectangular touch screen. In other examples, these collimating lenses are absent to enable a wide, 180° spread angle of light beams from each emitter.

Different emitter-detector beams have different levels of detected intensity at their respective detectors. In an exemplary example, 16 diodes are arranged along the screen length and 9 diodes are arranged along the screen width. **TABLES I** and **II** below list the detected intensity of unblocked beams from each emitter at each of detectors **PD0** - **PD15** along the screen length **(TABLE I),** and at each of the detectors **PD16** - **PD24** along the screen width **(TABLE II).** Empty cells indicate that no signal is detected for the corresponding emitter-detector beam.

**TABLE I:** Detected intensities of unblocked beams from each emitter at each of the 15 detectors along the screen length

| | PD0 | PD1 | PD2 | PD3 | PD4 | PD5 | PD6 | PD7 | PD8 | PD9 | PD10 | PD11 | PD12 | PD13 | PD14 | PD15 |
|---|---|---|---|---|---|---|---|---|---|---|---|---|---|---|---|---|
| LED0 | 236 | 236 | 236 | 236 | 236 | 236 | 236 | 236 | 180 | 75 | 39 | 10 | | | | |
| LED1 | 236 | 236 | 236 | 236 | 236 | 236 | 236 | 236 | 236 | 179 | 101 | 68 | 23 | | | |
| LED2 | 236 | 236 | 236 | 236 | 236 | 236 | 236 | 236 | 236 | 236 | 189 | 126 | 88 | 36 | 18 | |
| LED3 | 236 | 236 | 236 | 236 | 236 | 236 | 236 | 236 | 236 | 236 | 236 | 174 | 114 | 47 | 32 | 7 |
| LED4 | 236 | 236 | 236 | 236 | 236 | 236 | 236 | 236 | 236 | 236 | 236 | 234 | 164 | 100 | 62 | 25 |
| LED5 | 236 | 236 | 236 | 236 | 236 | 236 | 236 | 236 | 236 | 236 | 236 | 236 | 217 | 122 | 75 | 25 |
| LED6 | 236 | 236 | 236 | 236 | 236 | 236 | 236 | 236 | 236 | 236 | 236 | 236 | 236 | 236 | 184 | 117 |
| LED7 | 236 | 236 | 236 | 236 | 236 | 236 | 236 | 236 | 236 | 236 | 236 | 236 | 236 | 236 | 236 | 162 |
| LED8 | 236 | 236 | 236 | 236 | 236 | 236 | 236 | 236 | 236 | 236 | 236 | 236 | 236 | 236 | 236 | 234 |
| LED9 | 184 | 169 | 236 | 236 | 236 | 236 | 236 | 236 | 236 | 236 | 236 | 236 | 236 | 236 | 236 | 236 |
| LED10 | 139 | 132 | 165 | 236 | 236 | 236 | 236 | 236 | 236 | 236 | 236 | 236 | 236 | 236 | 236 | 236 |
| LED11 | 84 | 75 | 100 | 195 | 235 | 236 | 236 | 236 | 236 | 236 | 236 | 236 | 236 | 236 | 236 | 236 |
| LED12 | 47 | 49 | 96 | 205 | 236 | 236 | 236 | 236 | 236 | 236 | 236 | 236 | 236 | 236 | 236 | 236 |
| LED13 | 4 | | 15 | 90 | 122 | 194 | 236 | 236 | 236 | 236 | 236 | 236 | 236 | 236 | 236 | 236 |
| LED14 | | | | 57 | 75 | 162 | 197 | 236 | 236 | 236 | 236 | 236 | 236 | 236 | 236 | 236 |
| LED15 | | | | 26 | 45 | 97 | 148 | 236 | 236 | 236 | 236 | 236 | 236 | 236 | 236 | 236 |
| LED16 | 236 | 236 | 44 | | | | | | | | | | | | | |
| LED17 | 236 | 236 | 236 | 61 | 12 | | | | | | | | | | | |
| LED18 | 145 | 236 | 236 | 236 | 183 | | | | | | | | | | | |
| LED19 | 10 | 50 | 236 | 236 | 236 | 236 | 59 | | | | | | | | | |
| LED20 | | | 72 | 236 | 236 | 236 | 236 | 77 | 13 | | | | | | | |
| LED21 | | | 4 | 178 | 236 | 236 | 235 | 153 | 120 | 18 | | | | | | |
| LED22 | | | | 1 | 236 | 216 | 177 | 160 | 134 | 70 | 23 | | | | | |
| LED23 | | | | 57 | 149 | 180 | 159 | 149 | 84 | 49 | 32 | 1 | | | | |
| LED24 | | | | 29 | 195 | 200 | 183 | 171 | 86 | 61 | 51 | 30 | 14 | 26 | | |

**TABLE II:** Detected intensities of unblocked beams from each emitter at each of the 9 detectors along the screen width

|  | PD16 | PD17 | PD18 | PD19 | PD20 | PD21 | PD22 | PD23 | PD24 |
|---|---|---|---|---|---|---|---|---|---|
| LED0 |  |  |  |  |  |  |  |  |  |
| LED1 |  |  |  |  |  |  |  |  |  |
| LED2 | 41 | 6 |  |  |  |  |  |  |  |
| LED3 | 49 | 25 |  |  |  |  |  |  |  |
| LED4 | 69 | 62 |  |  |  |  |  |  |  |
| LED5 | 44 | 44 | 15 |  |  |  |  |  |  |
| LED6 | 106 | 130 | 94 | 28 |  |  |  |  |  |
| LED7 | 96 | 139 | 165 | 235 |  |  |  |  |  |
| LED8 | 108 | 141 | 132 | 193 | 26 |  |  |  |  |
| LED9 | 125 | 154 | 169 | 236 | 153 | 17 |  |  |  |
| LED10 | 123 | 172 | 201 | 236 | 236 | 236 |  |  |  |
| LED11 | 27 | 45 | 117 | 236 | 236 | 236 | 98 |  |  |
| LED12 |  |  |  | 236 | 236 | 236 | 236 | 16 |  |
| LED13 |  |  |  | 103 | 236 | 236 | 235 | 72 |  |
| LED14 |  |  |  |  | 39 | 236 | 236 | 235 |  |
| LED15 |  |  |  |  | 49 | 236 | 235 |  |  |
| LED16 | 236 | 171 | 166 | 170 | 162 | 164 | 142 | 142 | 160 |
| LED17 | 236 | 209 | 206 | 235 | 233 | 222 | 204 | 219 | 233 |
| LED18 | 180 | 201 | 164 | 166 | 179 | 170 | 147 | 169 | 192 |
| LED19 | 197 | 224 | 200 | 209 | 187 | 165 | 151 | 199 | 236 |
| LED20 | 191 | 214 | 193 | 198 | 187 | 170 | 167 | 194 | 213 |
| LED21 | 235 | 235 | 234 | 232 | 212 | 187 | 173 | 211 | 222 |
| LED22 | 204 | 215 | 215 | 226 | 202 | 192 | 188 | 209 | 198 |
| LED23 | 197 | 201 | 217 | 234 | 209 | 201 | 173 | 170 | 169 |
| LED24 | 188 | 183 | 164 | 180 | 129 | 118 | 99 | 99 | 192 |

The maximum detection intensity in **TABLES I** and **II** is 236. A detection intensity of at least 10 was found, by experiment, to be sufficiently greater than a noise signal, and therefore useful for detecting touches. In some examples, a threshold of ½ the expected intensity is used to determine whether a beam is blocked. Thus, if the expected intensity is 236, a detection signal below 118 renders the beam as blocked, whereas if the expected intensity is 49, a detection signal below 25 renders the beam as blocked.

In addition, certain beams were found to continue being detected even when the entire screen was blocked. These beams, situated at corners of the touch screen, do not need to cross the screen area in order to arrive at their respective detectors. **TABLE III** lists the detection values registered when the entire rectangular touch screen area is covered by a solid opaque object.

**TABLE III:** Detected intensities of blocked beams

| LED | PD0 | PD1 | PD2 | PD3 | PD4 | ... | PD15 | PD16 | PD17 | PD18 | PD19 | PD20 | PD21 | PD22 | PD23 | PD24 |
|---|---|---|---|---|---|---|---|---|---|---|---|---|---|---|---|---|
| 0 | | | | | | | | | | | | | | | | |
| 1 | | | | | | | | | | | | | | | | |
| 2 | | | | | | | | | | | | | | | | |
| 3 | | | | | | | | | | | | | | | | |
| 4 | | | | | | | | | | | | | | | | |
| 5 | | | | | | | | | | | | | | | | |
| 6 | | | | | | | | | | | | | | | | |
| 7 | | | | | | | | | | | | | | | | |
| 8 | | | | | | | | | | | | | | | | |
| 9 | | | | | | | | | | | | | | | | |
| 10 | | | | | | | | | | | | | | | | |
| 11 | | | | | | | | | | | | | | | | |
| 12 | | | | | | | | | | | | | | | | |
| 13 | | | | | | | | | | | | | | | | |
| 14 | | | | | | | | | | | | | | | | 235 |
| 15 | | | | | | | | | | | | | | 44 | 235 | 235 |
| 16 | 236 | 236 | 40 | | | | | | | | | | | | | |
| 17 | 236 | | | | | | | | | | | | | | | |
| 18 | 135 | | | | | | | | | | | | | | | |
| 19 | 8 | | | | | | | | | | | | | | | |
| 20 | | | | | | | | | | | | | | | | |
| 21 | | | | | | | | | | | | | | | | |
| 22 | | | | | | | | | | | | | | | | |
| 23 | | | | | | | | | | | | | | | | |
| 24 | | | | | | | | | | | | | | | | |

**TABLE IV** lists with an 'x' the useful beams in this exemplary example by including beams from **TABLES I** and **II** having an unblocked detection value of at least 10, and excluding the beams detected in **TABLE III.**

| | PD0 | PD1 | PD2 | PD3 | PD4 | PD5 | PD6 | PD7 | PD8 | PD9 | PD10 | PD11 | PD12 | PD13 | PD14 | PD15 | PD16 | PD17 | PD18 | PD19 | PD20 | PD21 | PD22 | PD23 | PD24 |
|---|---|---|---|---|---|---|---|---|---|---|---|---|---|---|---|---|---|---|---|---|---|---|---|---|---|
| LED0 | X | X | X | X | X | X | X | X | X | X | X | X | | | | | | | | | | | | | |
| LED1 | X | X | X | X | X | X | X | X | X | X | X | X | X | | | | | | | | | | | | |
| LED2 | X | X | X | X | X | X | X | X | X | X | X | X | X | X | X | | X | | | | | | | | |
| LED3 | X | X | X | X | X | X | X | X | X | X | X | X | X | X | X | | X | X | | | | | | | |
| LED4 | X | X | X | X | X | X | X | X | X | X | X | X | X | X | X | X | X | X | | | | | | | |
| LED5 | X | X | X | X | X | X | X | X | X | X | X | X | X | X | X | X | X | X | X | | | | | | |
| LED6 | X | X | X | X | X | X | X | X | X | X | X | X | X | X | X | X | X | X | X | X | | | | | |
| LED7 | X | X | X | X | X | X | X | X | X | X | X | X | X | X | X | X | X | X | X | X | X | | | | |
| LED8 | X | X | X | X | X | X | X | X | X | X | X | X | X | X | X | X | X | X | X | X | X | X | | | |
| LED9 | X | X | X | X | X | X | X | X | X | X | X | X | X | X | X | X | X | X | X | X | X | X | X | | |
| LED10 | X | X | X | X | X | X | X | X | X | X | X | X | X | X | X | X | X | X | X | X | X | X | X | | |
| LED11 | X | X | X | X | X | X | X | X | X | X | X | X | X | X | X | X | X | X | X | X | X | X | X | X | |
| LED12 | X | X | X | X | X | X | X | X | X | X | X | X | X | X | X | X | | | | X | X | X | X | X | |
| LED13 | | | X | X | X | X | X | X | X | X | X | X | X | X | X | X | | | | | X | X | X | X | X |
| LED14 | | | X | X | X | X | X | X | X | X | X | X | X | X | X | | | | | | | X | X | X | |
| LED15 | | | X | X | X | X | X | X | X | X | X | X | X | X | X | X | | | | | | | | | |
| LED16 | | | | | | | | | | | | | | | | | X | X | X | X | X | X | X | X | X |
| LED17 | | X | X | X | X | | | | | | | | | | | | X | X | X | X | X | X | X | X | X |
| LED18 | | X | X | X | X | | | | | | | | | | | | X | X | X | X | X | X | X | X | X |
| LED19 | | X | X | X | X | X | X | | | | | | | | | | X | X | X | X | X | X | X | X | X |
| LED20 | | | X | X | X | X | X | X | X | | | | | | | | X | X | X | X | X | X | X | X | X |
| LED21 | | | | X | X | X | X | X | X | X | | | | | | | X | X | X | X | X | X | X | X | X |
| LED22 | | | | | X | X | X | X | X | X | X | | | | | | X | X | X | X | X | X | X | X | X |
| LED23 | | | | | X | X | X | X | X | X | X | X | | | | | X | X | X | X | X | X | X | X | X |
| LED24 | | | | | X | X | X | X | X | X | X | X | X | X | X | X | X | X | X | X | X | X | X | X | X |

**TABLE IV:** Usable detection beams

**Touch Coordinate Method**

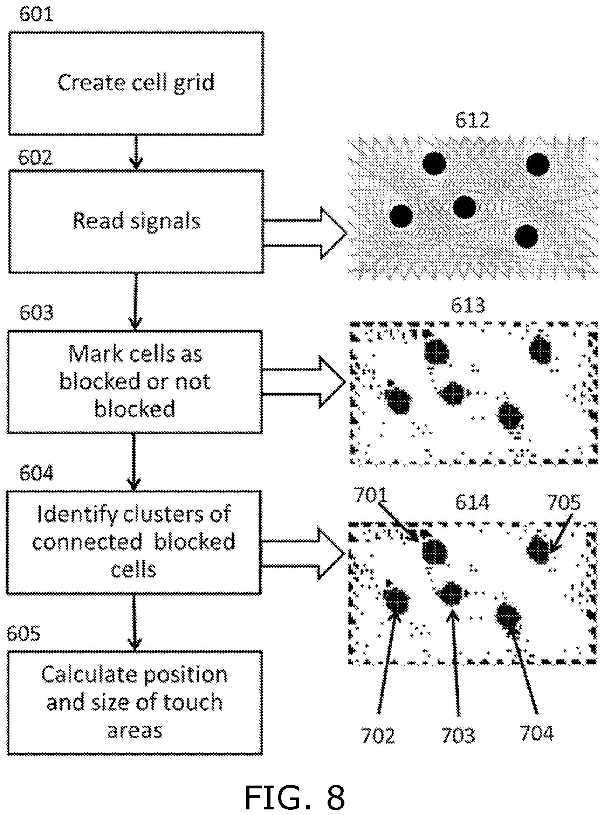

This section describes in detail the operations to determine a tracked object's location. Reference is made **FIG. 8,** which is a flow chart describing a first method for identifying touch locations. **FIG. 8** shows a first method for calculating touch positions. At step **601** the touch sensitive area is parsed into a two-dimensional (2D) pixel or cell grid. In addition, a table is generated storing a list of pixels or cells traversed by each active detection beam marked in **TABLE IV.** In some examples, the table is stored as a list of pixel entries, each pixel entry storing a list of beams that pass through the pixel. In other examples, the table is stored as a list of light beam entries, each light beam entry storing a list of pixels along its beam path. Step **601** is performed offline. In some examples, the cells are of different sizes depending on location. For example, at the center of the screen the cells are smaller corresponding to the high density of beams vis-à-vis cells near the edges of the screen where the density of beams is lower. In some examples, the cells are not aligned along a two dimensional grid. Rather, each cell surrounds a point of intersection between two beams.

At step **602** a scan is performed for all usable beams listed in **TABLE IV.** Each beam is marked as either blocked or unblocked, according to a detection threshold, as described hereinabove. Screenshot **612** illustrates the unblocked beams in a case of five simultaneous touches.

At step **603** each pixel in the 2D cell grid from step **601** receives a binary value (blocked = 1 / not blocked = 0). This binary value is a logical AND between all of the binary values from step **602** of LED-to-PD light beams that pass through the cell, according to the stored list from step **601.** Thus, in this method unblocked beams are used to mark cells as untouched. A single, unblocked beam passing through a grid cell is sufficient to mark the cell as untouched. According to an alternative method described below intersections of blocked beams are used to fill the grid from step **601.** Screenshot **613** illustrates cells marked as untouched (white) and touched (black).

At step **604** touch areas are formed by connecting neighboring blocked grid cells: for each pixel in step **603** having a value of 1 (blocked), four immediate neighbors are checked, namely, top, bottom, left and right neighbors. Any neighbor having a value of 1 is connected. Screenshot **614** illustrates five touch locations **701** - **705** identified by joining connected neighbors.

At step **605** the touch coordinates and area of each touch location are calculated. In some examples, the area of a touch location is the sum of its pixels and the touch position is the center of gravity of the area. In some examples, a valid touch location must have a minimum area, e.g., based on the expected size of a finger. Furthermore, in some examples a maximum size for a touch object is also provided. When a touch area exceeds the maximum size it is either discarded or it is assumed to contain multiple objects placed together on the screen. Thus, the touch sensor is operable to distinguish between a single finger performing a gesture and multiple fingers placed together performing the same gesture. Similarly, when the system tracks multiple touch objects, the system is operable to continue tracking them as multiple objects even after they are brought together based on the large size of the touch object, e.g., in a pinch gesture.

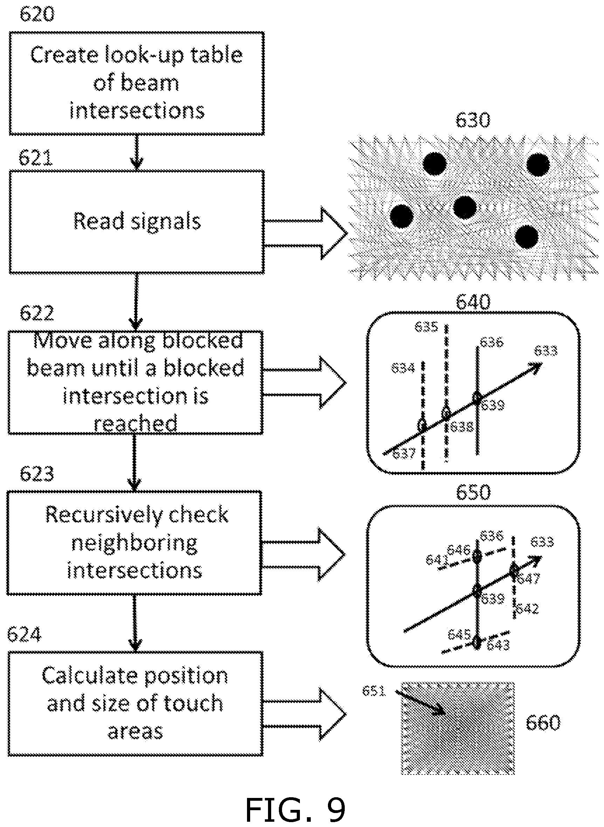

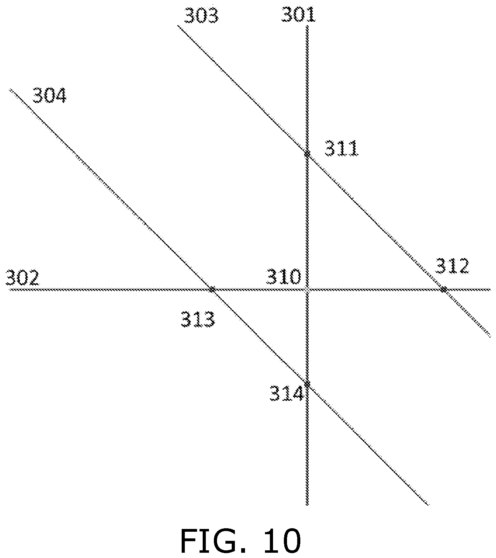

Reference is made to **FIG. 9,** which is a flow chart describing a second method for identifying touch locations. At step **620** a lookup table of intersection points between light beams is generated. In this table, every entry includes, for each light beam of the usable light beams listed in Table IV, other beams that intersect that beam and their respective points of intersection, and for each point of intersection the lookup table includes pointers to four neighboring intersection points, namely two immediate neighboring intersection points along each of the two intersecting beams. These neighboring intersection points are illustrated in **FIG. 10.**

Reference is made to **FIG. 10,** which is an illustration of neighboring intersections used by the method of **FIG. 9. FIG. 10** shows two primary intersecting beams **301, 302** intersecting at point **310.** Two additional beams, **303, 304,** also intersect beams **301, 302** at points **311 - 314.** The lookup table entry for intersection point **310** includes the coordinates of point **310** and pointers to neighboring intersection points **311 - 314.**

Returning to **FIG. 9,** at step **621** all usable beams, as listed in **TABLE IV,** are scanned and assigned a binary blocked/unblocked value by comparing the beam's detection value to a threshold. In some examples, a normalized detection value is used instead of a binary value; the normalized values from neighboring beams are then interpolated to refine the touch location calculation.

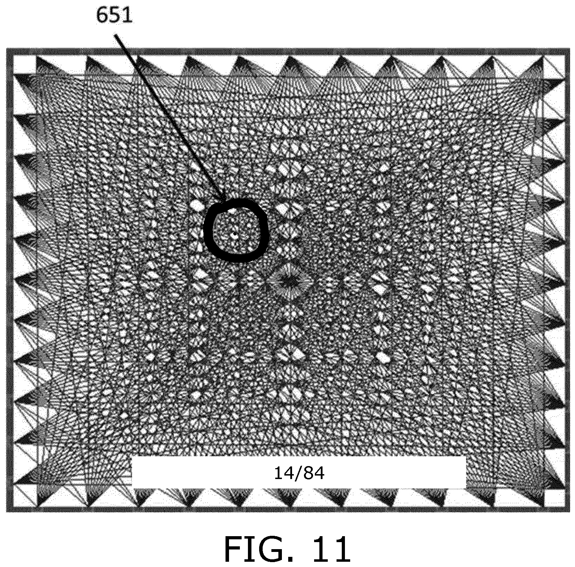

At step **622** blocked beams are analyzed in the following manner. When a first blocked beam is identified, the method checks every intersection point along the blocked beam to see if that point is an intersection of two blocked beams. When such an intersection point is identified, the method recursively checks all immediate neighboring intersection points for additional intersections of two blocked beams until no further intersection points of two blocked beams are found. All neighboring intersection points that are also formed by two blocked beams are assumed to belong to the same touch object and are therefore grouped together. This recursive method finds all of the connected intersections belonging to a single touch object. The method is then repeated beginning with a blocked beam not already used in the previous steps. The resulting network of connected intersection points, where pairs of blocked beams intersect, is illustrated inside circle **651** in **FIG. 11.**

Reference is made to **FIG. 11,** which is an illustration of a network of connected blocked beams used to locate a touch object. **FIG. 11** shows blocked and non-blocked beams in a case of one touch. Thus, a significant intersection point is a point at which two blocked beams intersect. From a first such intersection point, the current method recursively builds a network of connected blocked beam intersections. This area is marked in **FIG. 11** by circle **651.**

Step **622** is illustrated by frame **640** in **FIG. 9.** Frame **640** includes a first blocked beam **633.** Three intersection points **637** - **639** along beam **633** are shown. Points **637** and **638** are where beam **633** intersects two non-blocked beams, **634** and **635,** respectively. Point **639** is an intersection between beam **633** and a second blocked beam **636.** Intersecting beam **636** is the second blocked beam identified by this method.

At step **623** the method recursively checks intersection points neighboring point **639** to create a network or web of neighboring intersections that belong to the same touch object. This is illustrated in **FIG. 9** by frame **650,** showing first intersection point **639** and neighboring intersection points **645** - **647.** Point **647** is the next intersection point along beam **633;** points **645** and **646** are neighboring intersections along second blocked beam **636.** Point **645** is where beam **636** meets beam **643,** and point **646** is where beam **636** meets beam **641.** The recursive nature of this step means that if any of these points **645** - **647** are also formed by two blocked beams, the search expands to their neighbors. The list of neighboring intersections is generated offline and stored in memory. The method begins by sequentially checking the beams. The first blocked beam branches the search to check its neighbors. A list of checked beams is used to avoid checking neighbor beams again when the method resumes sequentially checking for a first blocked beam.

At step **624** the method proceeds to analyze the connected intersection points to extract the first and last blocked intersection point on each beam. This provides an outline of the touch area. Thus, in **FIG. 11,** these outermost points form yellow circle **651** that surrounds the network, or web, of red lines. A miniaturized version of **FIG. 11** is presented in frame **660** in **FIG. 9,** with yellow circle **651** surrounding the web of red beams. The touch location is calculated as the average of these two endpoints for all beams. The width and height of the touch area are calculated by determining the area's left, right, top and bottom coordinates. These are determined by the maximum and minimum coordinates of intersection points in each direction, or alternatively, by averaging the coordinates of two or three maximum and minimum intersection points in each direction.

If a candidate touch location includes at least one unique blocked beam, i.e., if a blocked beam that does not pass through any other candidate touch locations, then it is confirmed to be an actual touch location. If no unique blocked beam corresponds to a candidate touch location, i.e., if all blocked beams passing through the candidate location pass through at least one other confirmed touch location, then that candidate touch location is discarded. In this way phantom touches, i.e., locations corresponding to intersections of blocked beams that are not generated by an object at the intersection location, but rather by two objects that cast a light-beam shadow on that location, are discarded.

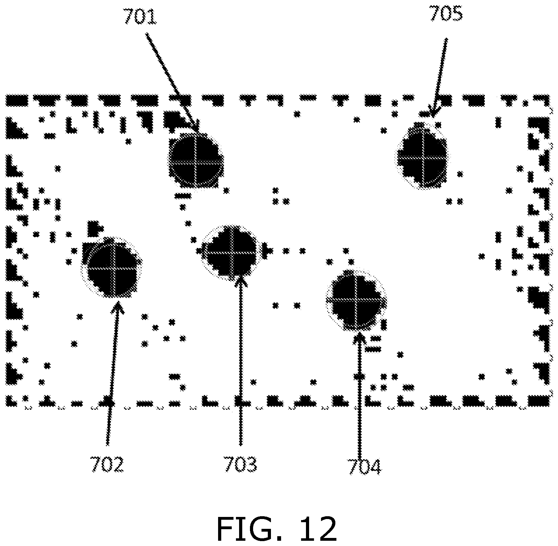

Reference is made to **FIG. 12,** which is a map of locations at which detection beams intersect. As explained hereinabove, intersections for which every intersecting beam is blocked is marked as a blocked intersection. Blocked intersections are shaded black in **FIG. 12. FIG. 12** shows five clusters of blocked intersections **701** - **705** corresponding to five touch objects identified by the system and methods described hereinabove. Additional blocked intersections are shown, but they belong to clusters too small to quality as touch objects.

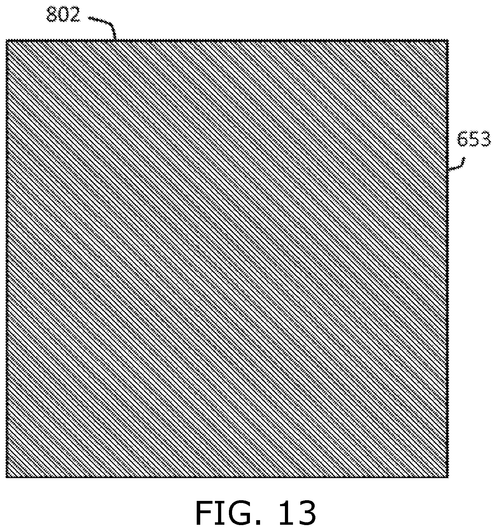

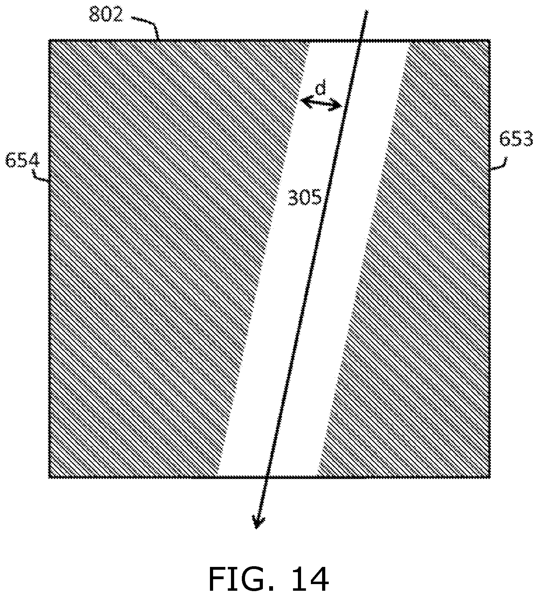

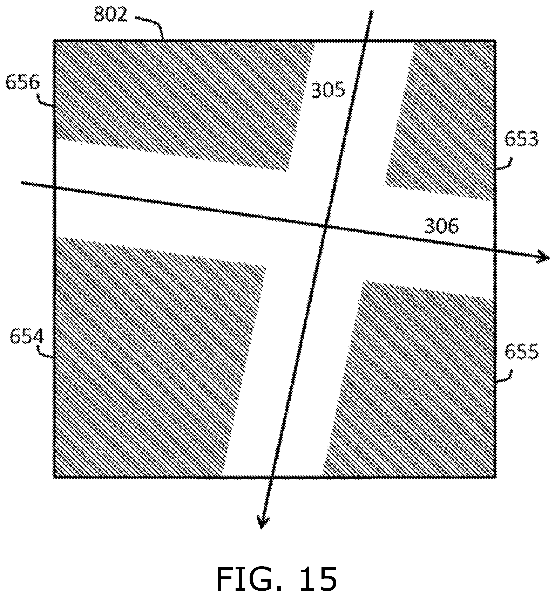

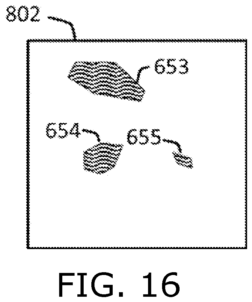

Reference is made to **FIGS. 13** - **18,** which are illustrations of an alternative method for determining touch locations, whereby portions of a large, candidate touch area are excluded based on unblocked thin light beams. The method uses very thin beams and assumes that any object touching the screen has a radius of at least d. The method begins by defining the entire screen as a potential touch area Q in which touch objects of radius $d$ may be present. **FIG. 13** shows a screen **802** with area Q indicated by shaded area **653.** An unobstructed narrow beam indicates that no object having radius $d$ is located within a distance $d$ from the beam. This situation is illustrated in **FIG. 14** showing unobstructed, narrow beam **305** passing across screen **802.** Based on the assumption that any touch object has a radius $d$, it is evident that no such touch object is located within distance $d$ of beam **305.** Therefore a corridor having a width of $2d$ along beam **305** is removed or excluded from Q, splitting Q into two polygons **653** and **654.** As more unobstructed beams are added, more areas are removed from Q. Thus, in **FIG. 15** two unobstructed beams **305** and **306** are shown, whereby Q is divided into four polygons **653** - **656.** Eventually, Q becomes an increasing number of separate, convex polygons, with an increasing number of edges, as illustrated in **FIG. 16,** where Q has been reduced to three convex polygons **653** - **655.** When implementing this method it is sometimes advantageous to advance through neighboring beams rather than distant beams. For example, referring back to **FIG. 15,** it can be seen that a second unblocked beam alongside beam **305** would reduce the size of Q without adding any additional polygons, whereas in **FIG. 16** unblocked beam **306** adds two new polygons **355** and **356.** Additional polygons in Q require, inter alia, more memory to store the additional polygon data.

In some implementations, the method does not proceed beyond dividing Q based on unblocked narrow beams. The method ends when all unblocked beams have been analyzed. Each remaining polygon in Q is assumed to contain a touch object, but the object's location within the polygon is unknown. Reference is made to **FIG. 16** showing three polygons **653** - **655** remaining in Q, and thus three objects are assumed to be touching screen **802** at these three locations, respectively. In some implementations each polygon's center of gravity is assumed to be center of its respective touch object.

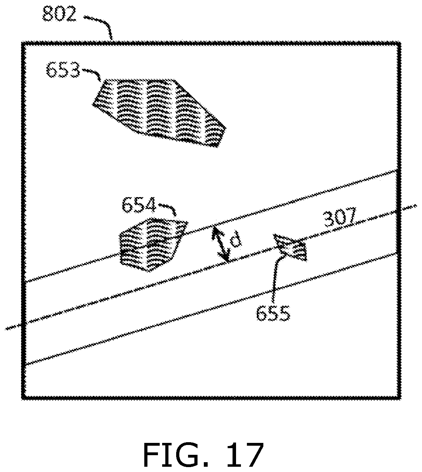

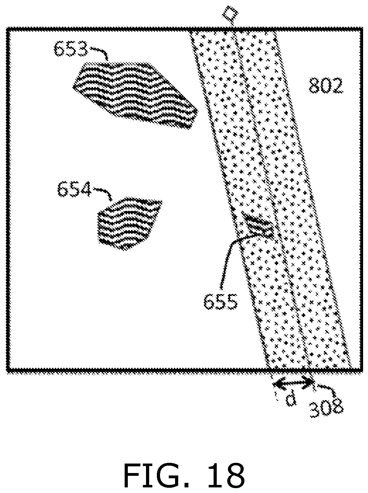

Certain touch patterns will generate more separate polygons in Q than touch points. These extra polygons are known as ghost points. One way of disambiguating or eliminating ghost points is to continue the method with a second step of analyzing blocked beams, as explained with reference to **FIGS. 17** and **18.** Each blocked beam $i$ indicates a region $O_i$ along the beam containing at least one touch object with radius $d$. Since touch objects can only exist in Q, there is at least one object where $O_i$ intersects Q, i.e., $O_i \cap Q \neq \varnothing$. **FIG. 17** shows blocked beam **307.** Two polygons in Q lie within a distance $d$ from the path of this beam, namely, polygons **654** and **655,** and both polygons are equally likely to contain the blocking object. In order to resolve this ambiguity, only polygons in Q having a unique blocked beam, i.e., the blocked beam passes through only one polygon in Q, are assumed to contain a touch object. **FIG. 18** shows a second blocked beam 308. Only one polygon in Q lies within a distance $d$ from the path of this beam, namely, polygon 655. Therefore, polygon **655** definitely contains a touch object. Polygon **654** may contain an additional touch object, or it may be a ghost point. In cases when multiple objects are being tracked, polygons in Q crossed by non-unique blocked beams that seem to correspond to a tracked object are assumed to contain the tracked object. Thus, if the location of **654** corresponds to a previously tracked touch object, polygon **654** is assigned a touch object, but otherwise it is ignored as a ghost point.

The center of an assumed touch object is the center of gravity of its polygon Q. Alternatively, the center of an assumed touch object is the center of gravity of the polygon defined by $O_i \cap Q$, which may be smaller than polygon **654.** Thus, polygons in Q traversed by a unique blocked beam definitely contain a touch object, whereas polygons in Q not traversed by a unique blocked beam but only by blocked beams that traverse multiple polygons in Q possibly contain a touch object. In some examples, these possible touch candidates are reported as possible, not definite, touch locations.

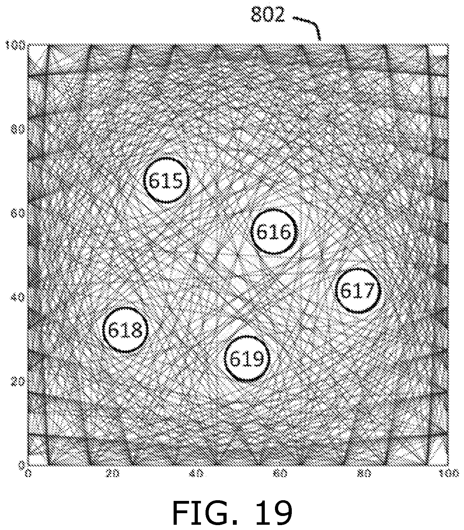

Reference is made to **FIG. 19,** which is an illustration of five circles **615** - **619** indicating areas though which no beams pass due to touch objects. Using the method illustrated in **FIGS. 13** - **18,** area Q inside each circle is the resulting touch candidate area. Thus, five touch objects are identified using only the unblocked beams shown in **FIG. 19.**

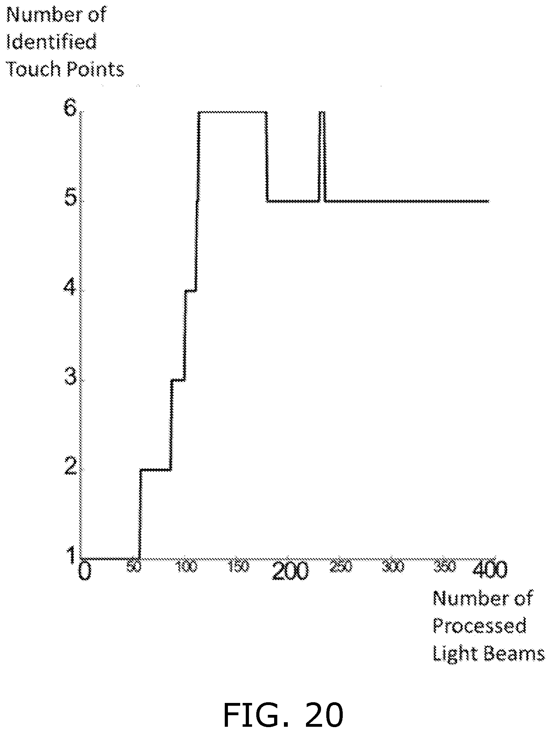

Reference is made to **FIG. 20,** which is a graph tracking the number of separate touch candidate areas as a function of the number of unblocked beams. The *x*-axis represents the number of beams analyzed in a touch system, and the *y*-axis represents the number of individual polygons identified in *Q.* After analyzing 150 beams, six separate polygons are identified in *Q.* However, once 250 beams have been analyzed, one of the polygons was eliminated because some of the unobstructed beams 150 - 250 passed within *d* of the sixth polygon, removing it from *Q.*

In order to detect a touch object, having an assumed minimum diameter *d,* anywhere on the screen, every location on the screen must be within a distance *d* of at least one beam. Therefore, any area not within a distance *d* of at least one beam is identified and removed from *Q.* Put another way, any area farther than *d* from *all* beams is an undetectable area *R.* Any area common to *Q* and *R*, namely, *R∩Q*, is a blind area. Such areas are defined by the beam layout and by the size of *d* and should be masked out of *Q* as it is not possible to determine if an object will be present there.

A variation of the method that excludes portions of area *Q* based on unblocked beams is now described. The method described above uses narrow beams, such that a beam is either blocked or unblocked, i.e., each beam has a binary state. The variation uses wide beams that can be partially blocked. In the case of wide beams an amount of blockage is used to determine where within the beam the blocking object may be located and excluding the remaining portion of the beam from *Q.*

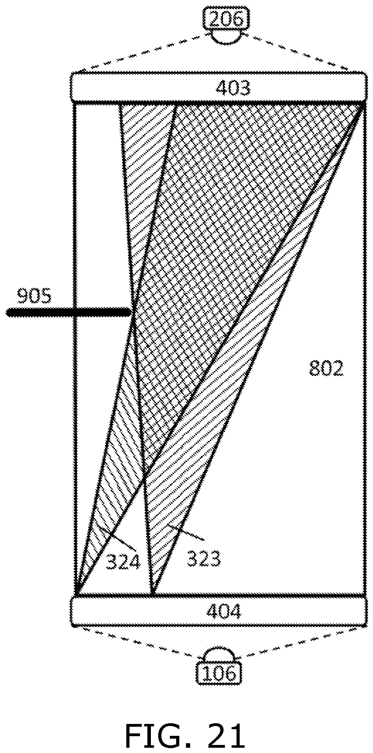

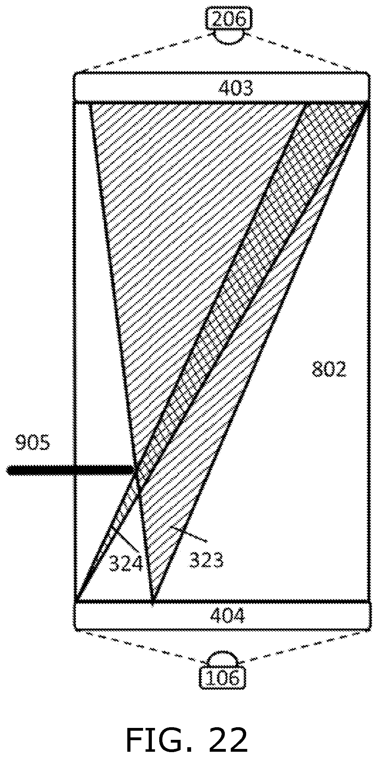

Reference is made to **FIGS. 21** and **22,** which are simplified illustrations of a partially blocked wide beam, that illustrate effects of where a blocking object is placed. **FIG. 21** shows beams of light **323** and **324** exiting from an extended emitter lens **404** and arriving at an extended receiver lens **403.** A wide beam from emitter **106** passing through lens **404** to receiver **206** via lens **403** can be simulated as a series of point-source beams originating along lens **404,** each point-source beam spreading to cover receiver lens **403.** Two such beams are shown in **FIG. 21,** namely beams **323** and **324.** In **FIG. 21,** touch object **905** blocks a portion of these beams from reaching the left edge of receiver lens **403.** The method assumes that any blocking object, e.g., pointer **905,** has a radius of at least *d* and that the object blocks the beam from one of the beam's edges inward. Thus, the amount of expected light that is absent at receiver **206** indicates the extent that a touch object of radius d has entered this beam. **FIG. 21** illustrates beam blockage when object **905** is inserted mid-way between lenses **404** and **403.** Greater amounts of light are blocked when object **905** is inserted nearer to either lens **404** or lens **403** and object **905** is inserted less than half-way through the beam.

**FIG. 22** shows object **905** inserted near emitter lens **404,** and its effect on simulated point-source beams **323** and 324. In this case the total amount of detected light at receiver **206** is less than the amount detected in the case of **FIG. 21,** even though object **905** is inserted to the same extent through the wide beam (from lens **404** to lens **403**). A similar amount of light is detected when object **905** is inserted near lens **403.**

Thus, when an object having a radius *d* blocks a portion of a wide beam, the portion extending from the side of the beam inward, the outer edge of the object must be somewhere along a curve within the beam. Beam light intensities for all possible touch points of an object with radius *d* are calculated numerically using the model illustrated by **FIGS. 21** and **22.**

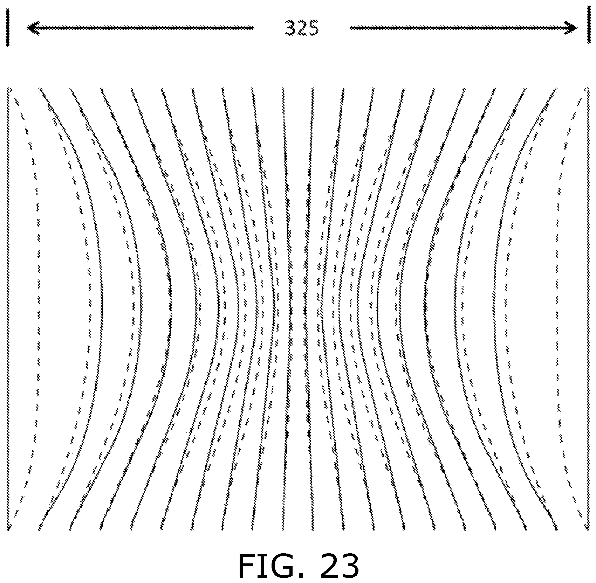

Reference is made to **FIG. 23,** which is a simplified exemplary illustration of iso-curves across the width of a wide light beam. **FIG. 23** shows the result of the above calculation displayed as a set of solid curves. The dashed curves are an approximation using a least squares fit polynomial. The solid and dashed curves are referred to as "*iso-curves"* (iso means equal). Thus, if the outer edge of the touch object is anywhere along an iso-curve the amount of light detected is the same.

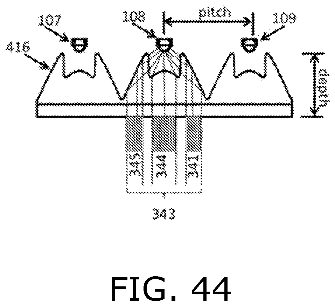

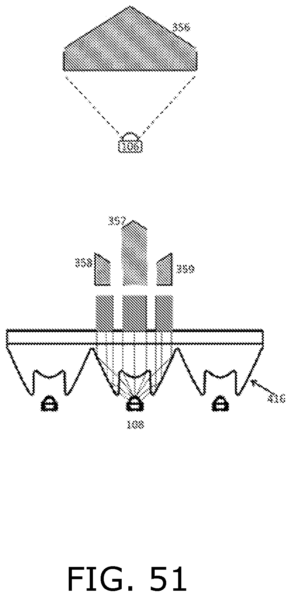

In some devices, the iso-curves are measured on the device. This is particularly suitable for systems that employ complex light guides in which the light intensity distribution across the width of the wide beam is not a simple curve, such as the light guide illustrated in **FIG. 44,** as explained below with reference to **FIG. 51.** In other devices, the iso-curves are calculated as follows. When the beam is obstructed from the left to some edge (*x, y*), light emitted from position *a* on the source will shine on the sensor from the projection of the edge $\beta_0$, to the right edge of the sensor. Integrating the lit up ratio of the sensor over all emitting positions gives the total detected light intensity from the sensor. Left to right for *x, a* and $\beta_0$ range from 0 to 1, and *y* - the coordinate along the beam from source to sensor, also ranges from 0 to 1. The formulas for calculating the intensity ratio *I* are given by Equations **(1)** and **(2):**

$$\beta_0(x,\, y,\, \alpha) = \begin{cases} 1, & \gamma > 0 \\ 0, & \gamma < 0 \\ \gamma, & \text{otherwise} \end{cases},\; \gamma = \alpha - \frac{x-\alpha}{y} \qquad \mathbf{(1)}$$

$$I = \int_{\alpha=0}^{1} 1 - \beta_0(x,\, y,\, \alpha)\, \mathrm{d}\alpha \qquad \mathbf{(2)}$$

In some devices, the iso-curves are measured on the device and added as a multiplier along with *a* and $\beta_0$.

**FIG. 23** illustrates a plurality of iso-curves in wide beam **325** representing steps of 5% of the unobstructed light intensity. Thus, the leftmost curve represents the possible locations of the object's outer edge when 5% of the intensity of beam **325** is blocked, the second from left represents 10% blocked intensity, etc. The iso-curves marking the possible object edge on the right half of beam **325** are a mirror reflection of the iso-beams on the left half of beam **325**. Although **FIG. 23** illustrates specific iso-curves, they are not quantum steps, as evidenced by Equations **(1)** and **(2)** above. Rather, the iso-curves progress linearly across the entire width of beam **325** and the illustrated curves in **FIG. 23** are merely examples.

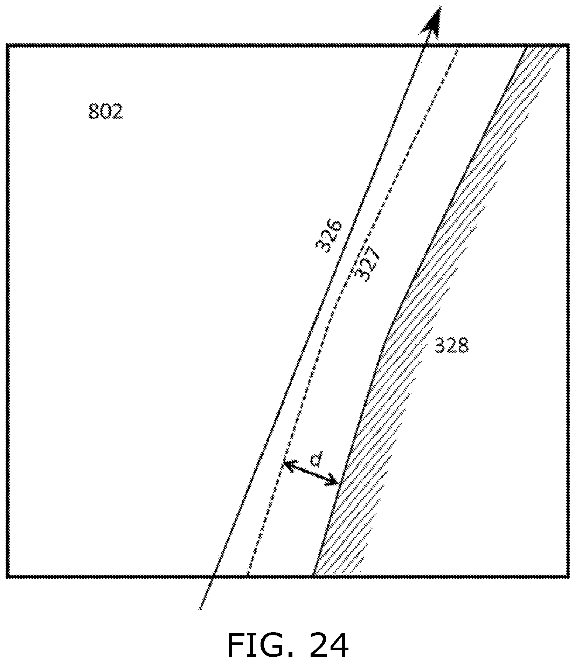

Conceptually, each iso-curve is the equivalent of a thin beam in the previous method. That is, in the previous method, an unblocked thin beam means that the object of radius $d$ was at least a distance $d$ away from the beam path. Similarly, when for example 20% of wide beam **325** is blocked, that means that, with reference to the iso-curves in **FIG. 23,** the edge is somewhere along the fourth iso-curve from the left, or the fourth iso-curve from the right. The object cannot be right of the fourth-from-left iso-curve or to the left of the fourth-from-right iso-curve and thus these areas are removed from $Q$. Moreover, because the method is searching for the center coordinates of the touch object, a margin of width $d$ along these iso-curves can further be removed from $Q$. This process is explained with reference to **FIGS. 24** - **30.**

Reference is made to **FIGS. 24** - **30,** which are simplified illustrations of a method of touch location determination, whereby portions of a large, candidate touch area are excluded based on unblocked, and partially blocked, wide light beams. **FIG. 24** shows the center **326** of a partially blocked wide beam crossing the screen. The amount of expected light missing from this wide beam is less than 50%; i.e., more than 50% of the beam's light was detected. A corresponding iso-curve **327** is shown to the left of center **326** indicating a border along which the object blocking this beam may be located. The object may be located anywhere to the right of iso-curve **327,** but it cannot extend to the left beyond this iso-curve. Thus the area covered by this wide beam and left of iso-curve **327** can be removed from $Q$, assuming the object entered the beam from the beam's right edge. Moreover, because the method seeks the coordinates of the center of the object, a margin of width $d$ to the right of iso-curve **327** can be further removed from $Q$. The area remaining in $Q$ is area 328.

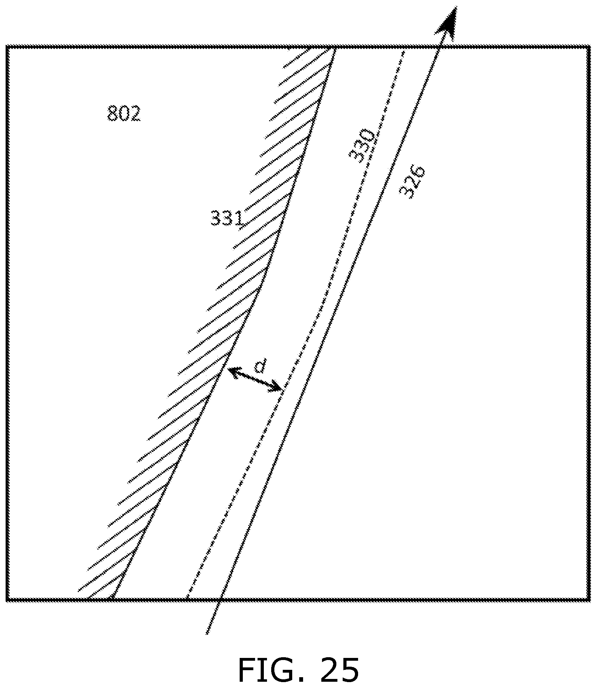

**FIG. 25** shows center **326** of the same beam as in **FIG. 24,** but shows how $Q$ is reduced when the object was inserted into this wide beam from the left. The corresponding iso-curve **330** is shown, to the right of which, the object cannot be located. And an additional margin having width $d$ is shown along iso-curve **330** inside which the center of the object cannot be located. The area thus remaining in $Q$ is shaded area **331.**

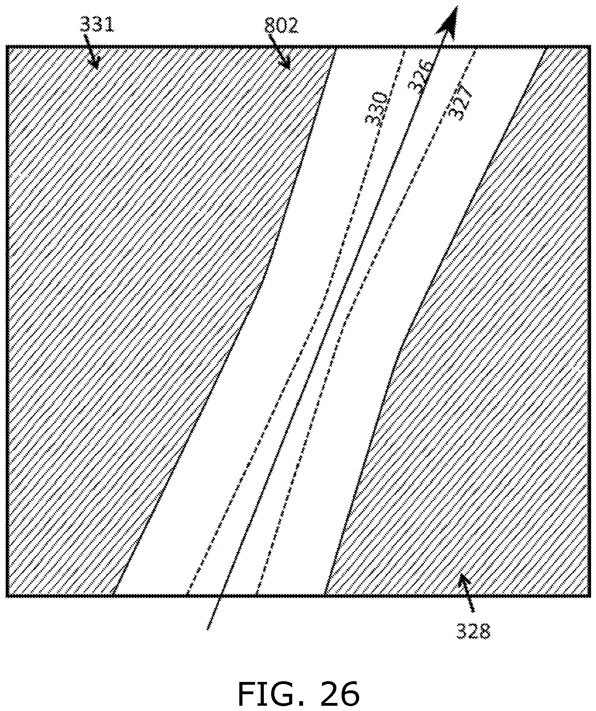

**FIG. 26** shows the areas **328** and **331** remaining in $Q$ (in screen **802**) based on this partially detected wide beam. Thus, areas **331** and **328** are convex, as a result of the fact that more than 50% of the wide beam was detected, in other words, less than 50% of the beam was blocked. When less than 50% of the wide beam is detected, the resulting areas in Q are concave, as explained below.

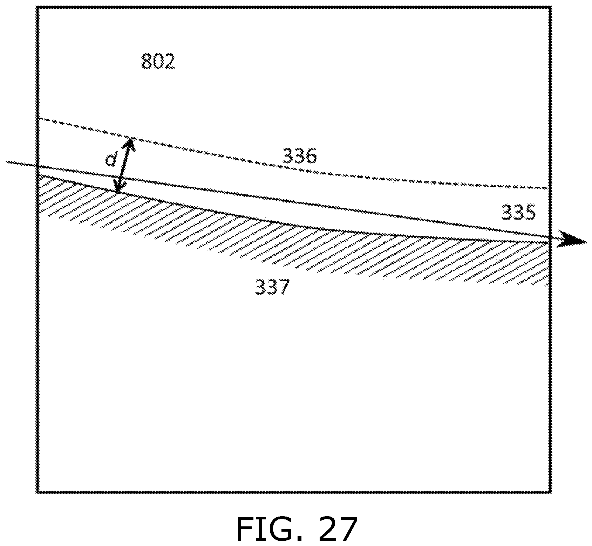

**FIG. 27** shows the center **335** of a wide horizontal beam that is partially blocked. In this case, more than 50% of the beam is blocked, i.e., less than 50% of the expected light for this beam was detected. As above, it is unknown from which side of the beam the object entered the beam. **FIG. 27** shows shaded area **337** as the remaining area $Q$ if the object was inserted into the beam from below. In this case, iso-curve **336** is the curve along which the outer edge of the object may lie. It is noted that because the object is assumed to have been inserted from the bottom of the beam, and blocks more than 50% of the wide beam's light, the object is assumed to cover center 335 of this beam and iso-curve **336** is therefore above center **335.** The object cannot extend upward of iso-curve **336** and therefore this area within the wide beam is removed from $Q$. Also, because this method searches for the center of the object, a margin of width $d$, the assumed radius of the object, below iso-curve **336** can also be removed from $Q$. Thus, the area remaining in $Q$ is shaded area **337.**

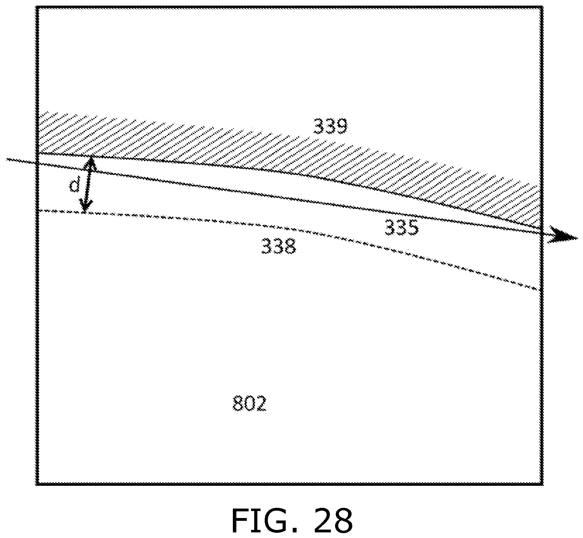

**FIG. 28** shows how much remains in $Q$ when it is assumed that the object enters the beam from above. **FIG. 28** shows the center **335** of the beam, iso-curve **338** below center **335,** and shaded area **339** remaining in $Q$. The border of area **339** is offset a margin $d$ from iso-curve **338.**

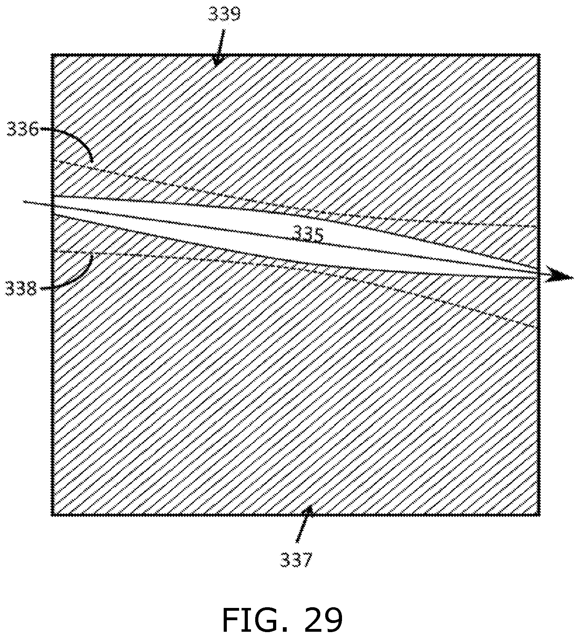

**FIG. 29** shows the area remaining in $Q$ after analyzing this horizontal beam that is mostly blocked, by combining the results of **FIGS. 27** and **28.** Areas **337** and **339** remaining in $Q$ are concave.

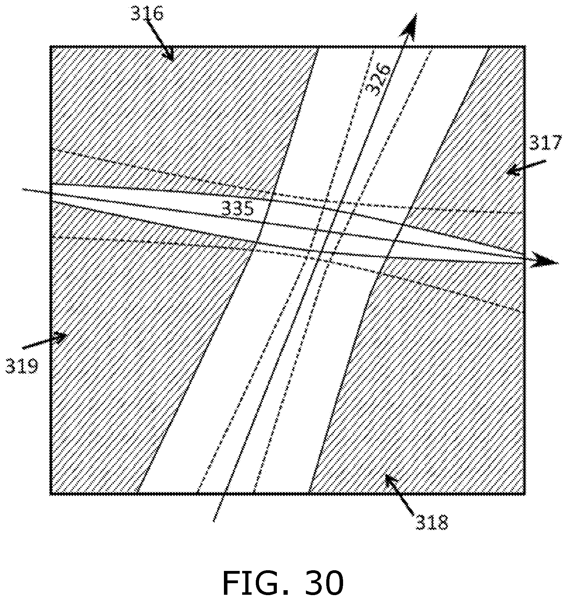

**FIG. 30** shows a map of remaining areas $Q$ after combining the analyses of the beams in **FIGS. 26** and **29.** $Q$ is now made up of four separate areas **316** - **319.**

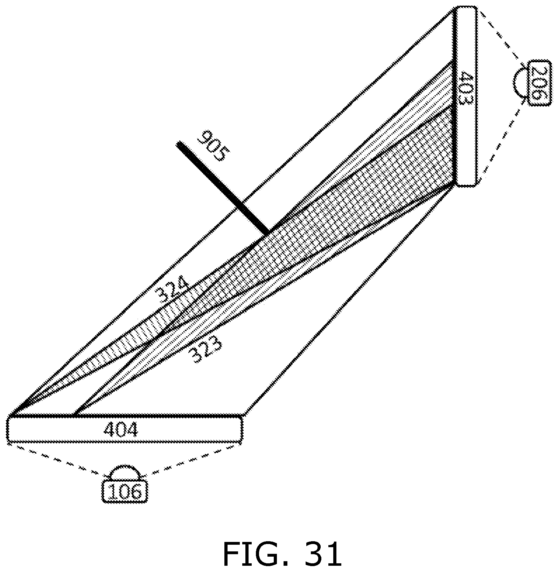

Although the illustrated wide beams span an area between opposite sides of screen **802,** this method also applies to beams that span an area between adjacent screen edges. Reference is made to **FIG. 31,** which is a simplified illustration of a partially blocked wide beam that extends between two adjacent screen edges. **FIG. 31** shows a diagonal beam extending from a bottom edge to the right edge of the screen. The wide beam generated by LED **106** and emitter lens **404** terminates at receiver lens **403** which directs the beam to receiver **206**. An object **905** is blocking a portion of the beam. Two simulated point-source beams **323** and **324** are shown, similar to those in **FIGS. 21** and **22.** Based on the calculations described hereinabove, a set of iso-curves is calculated for this beam to map possible edges of an object according to the amount of the beam that is blocked.

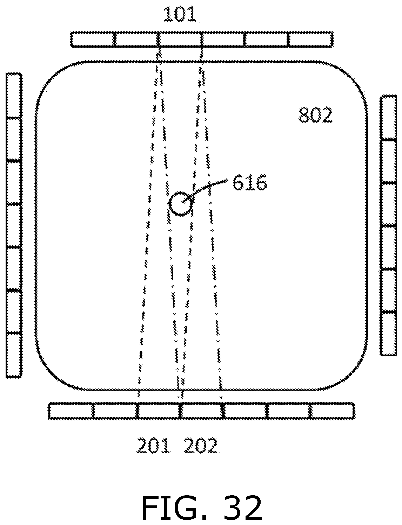

Reference is made to **FIGS. 32** - **34,** which are simplified drawings of an object being detected utilizing wide light beams. In some examples, opposing rows of emitters and receivers are used, each emitter being opposite a respective receiver, whereas in other examples the emitters are shift-aligned with the receivers. For example, each emitter may be positioned opposite a midpoint between two opposing receivers, or each emitter may be off-axis aligned with an opposite receiver, but not opposite the midpoint between two receivers. In addition, certain examples employ collimating lenses coupled with a surface of microlenses that refract light to form multiple wide divergent beams. A discussion of these different examples is included in US Patent No. 8,674,966 entitled ASIC CONTROLLER FOR LIGHT-BASED TOUCH SCREEN. Once touch locations have been determined using any of the systems and methods described in US Patent No. 8,674,966, the present application teaches how to resolve possible ghost touches.

**FIG. 32** shows touch location **616,** the initial location of which on the horizontal axis of screen **802** is determined based on a weighted sum of two detection signals: the partially blocked beams from emitter **101** to receiver **201,** and from emitter **101** to receiver **202.** That is, the beams from emitter **101** to receiver **201** and from emitter **101** to receiver **202** are wide beams and each beam has a respective coordinate value along the horizontal axis of screen **802,** $X_a$ and $X_b$. The coordinate value associated with each beam is assigned a weight $W$, corresponding to the amount of light blocked from that beam by the object at location **616.** The location is thus determined using the weighted average

$$X_P = (W_a X_a + W_b X_b) / (W_a + W_b) , \qquad \textbf{(3)}$$

where the weights $W_a$ and $W_b$ are normalized signal differences for the two beams.

If the pointer is detected by more than two emitter-receiver pairs, then the above weighted average is generalized to

$$X_P = \Sigma(W_n X_n) / (\Sigma W_n) , \qquad \textbf{(4)}$$

where the weights $W_n$ are normalized signal differences, and the $X_n$ are weight positions. These calculations are described in US Patent No. 8,674,966, with reference to FIGS. 137 and 143 - 150 therein, based on an initial assumed Y axis coordinate of the touch. Thus, both an $X$-coordinate and a $Y$-coordinate are determined initially. For the sake of exposition, the beams crossing screen **802** in a vertical direction, e.g., beams **101** - **201** and **101** - **202,** are referred to as vertical wide beams, and beams crossing screen **802** in a horizontal direction, e.g., beams between emitters and receivers along the left and right sides of screen **802,** are referred to as horizontal wide beams.

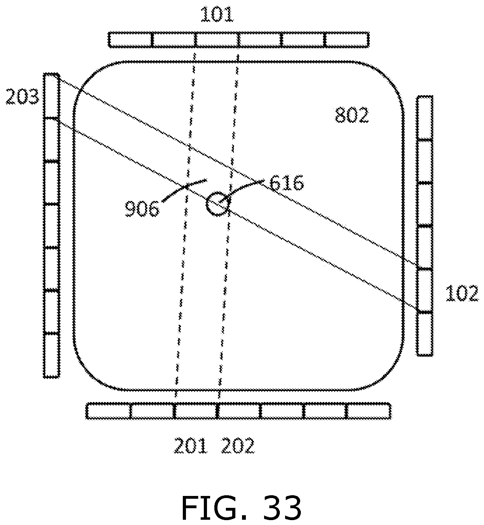

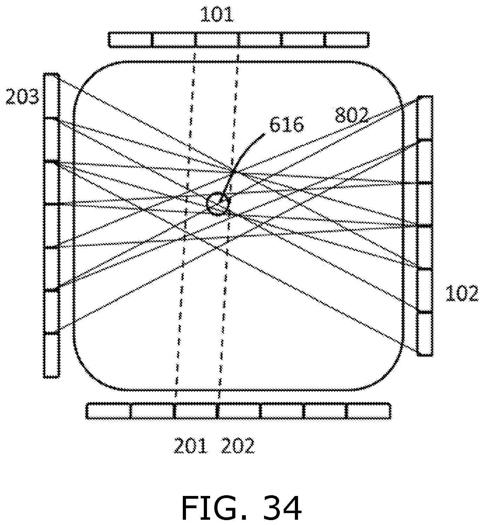

In order to refine the touch coordinate further and resolve any possibility that this determined location is actually a ghost point, a second set of calculations is performed. The first step in this second process is to assemble a list of all of the vertical wide beams that contributed to the $X$ coordinate calculation, e.g., beams **101** - **201** and **101** - **202** in the example of **FIG. 32.** For each vertical wide beam in this list, a secondary list is compiled of all wide beams from *any* emitter on the right side of the screen to *any* receiver on the left of the screen that crosses the determined location. **FIG. 33** shows two intersecting wide beams: vertical wide beam **101** - **201** and horizontal wide beam **102** - **203.** The secondary list of wide beams crossing beam **101** - **201** and also covering coordinate **616** is illustrated in **FIG. 34.** A similar secondary list is compiled for wide beams crossing beam **101** - **202** and also covering coordinate **616.**

Thus, numerous pairs of intersecting beams are identified in which the intersection covers the determined location. Each such intersection between two wide beams forms a two-dimensional shape, such as rhombus **906** in **FIG. 33.** The center of gravity of each rhombus is used as a coordinate in calculating a weighted sum to refine the touch location. However, if any of the intersecting beams in the secondary list is *entirely* unblocked, it is evident that the current touch location is a ghost touch, not a real touch.

When all of the intersecting beams in the secondary list are at least partially blocked, the touch location is refined by calculating a weighted sum using the center of gravity of each rhomboid intersection area multiplied by a weight corresponding to the degree to which that rhomboid's intersecting *horizontal* beam is blocked. In some examples, the weight corresponds to the degree to which *both* of that rhomboid's intersecting beams are blocked - i.e., both the vertical beam and the horizontal beam.

This process is repeated for the Y coordinate calculation, using horizontal beams that contribute to the initial Y coordinate calculation. In this case, the secondary list for each horizontal wide beam includes wide beams from any emitter along the top edge of the screen to any receiver along the bottom edge of the screen that covers the initial touch location.

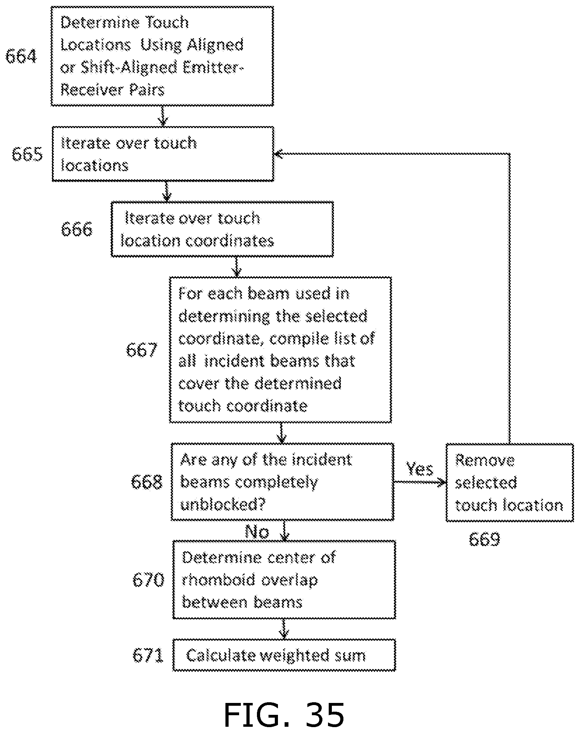

Reference is made to **FIG. 35,** which is a flowchart for a method of eliminating ghost touches. At step **664,** an initial set of possible touch coordinates is calculated using only vertical and horizontal light beams, but not diagonal beams. In systems in which the emitters are shift-aligned with the receivers, only shift-aligned emitter-receiver pairs are used. This includes divergent pairs of beams from one emitter to two receivers.

Step **665** is a loop that iterates over each touch candidate calculated in step **664.** Step **666** is a loop over the x and y coordinates of each touch candidate. The body of this inner loop is steps **667** - **671.**

At step **667** the system compiles a list of all beams that cross one of the beams used in step **664** and also traverse the coordinate calculated in step **664.** In some examples this is done by consulting a look up table. In other examples, calculations are used to compile this list.

At step **668** the system checks whether any of these incident beams is completely unblocked. If any of these beams is completely unblocked, the candidate touch location is determined to be a ghost point (step **669**) and the system advances to the next touch candidate.

If all of the beams at step **668** are partially blocked, the system refines the touch coordinate by calculating a weighted sum of all of the incident beams crossing this touch location. The rhomboid area of overlap between each of the wide beams used in step **664** and each of the wide beams identified in step **667** is calculated at step **670.** Then the center of gravity of this area is calculated, and the center of gravity's coordinate along the desired axis is used in the weighted sum. A respective weight is assigned to each center of gravity according to the degree to which the incidental beam is blocked. The refined touch coordinate is a weighted sum of all the center-of-gravity coordinates along the desired axis, calculated at step **670.** This weighted sum is calculated at step **671.**

**Lenses**

In some examples each LED and each PD is coupled with a lens. This section explains several lens structure alternatives that maximize the amount of light utilized for touch detection.

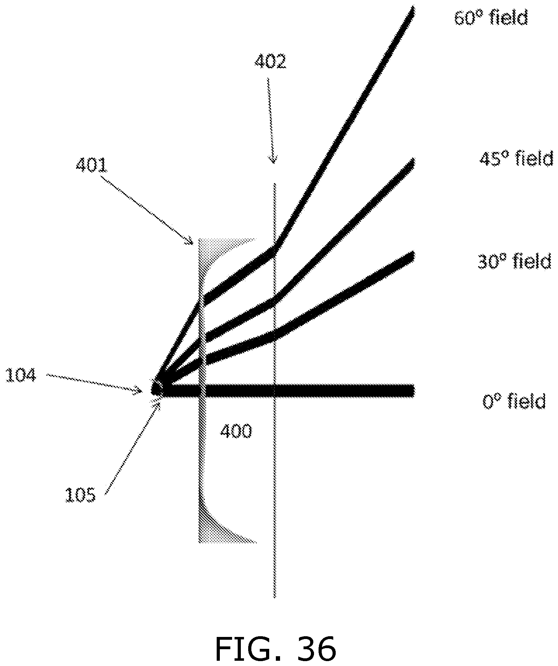

A first lens is acylindrical, with a progressive focal length, in order to keep good focus on the associated LED or PD chip for all angles. Reference is made to **FIG. 36,** which is a simplified drawing of a lens that distributes beams across many angles. **FIG. 36** is a view from above, showing an LED chip **104** emitting light beams through its plastic shell **105** and into lens **400.** Lens **400** has a curved entry surface **401** and a flat exit surface **402.** Four beams are shown exiting the lens at angles of 0° - 60°. However, a continuous array of beams exits along the lens exit surface **402,** and their angles gradually increase along the exit surface **402.** The curvature of entry surface **401** is optimized for this progression of exit angles. Entry surface **401** is only curved in the plane perpendicular to the screen, and thus has no optical power in the plane of the screen.

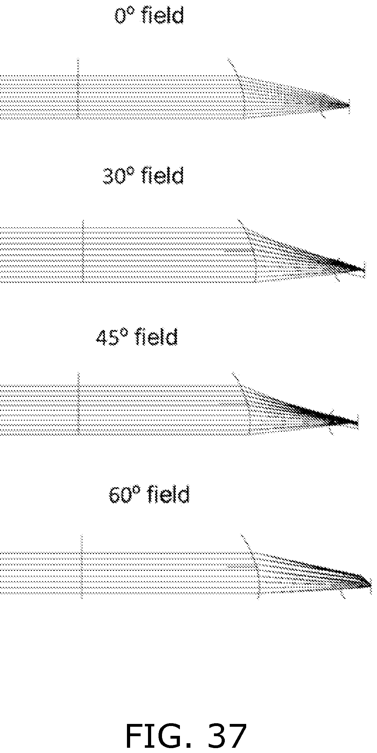

Reference is made to **FIG. 37,** which is a simplified figure of four different fields of view that are all focused on a single diode. **FIG. 37** is composed of four side views of fields of collimated beams each entering the light guide at a different angle, namely the same angles shown in the **FIG. 36** view from above. Despite these different angles, **FIG. 37** shows how all four fields are focused on the diode chip, despite their largely varying effective focal lengths.

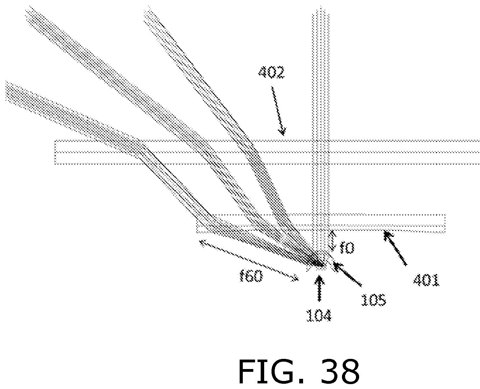

Reference is made to **FIG. 38,** which is an illustration of the four fields of view of **FIG. 37** as viewed from above. **FIG. 38** shows a short focal length **f0** for 0° and a long focal length **f60** for 60°. The same numbered elements represent the same objects, in **FIGS. 36** and **38.** Although lens **400** is described with reference to LED **104,** identical lenses are used for the PDs as well.

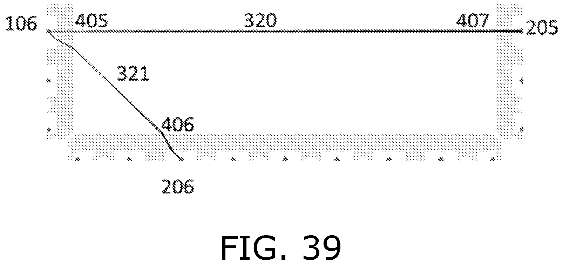

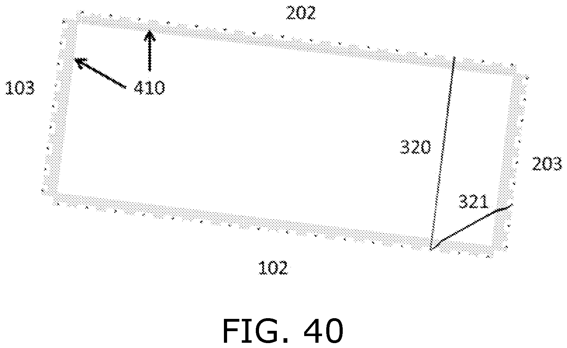

Reference is made to **FIGS. 39** and **40,** which are illustrations of two beams from one emitter to two respective PDs. **FIG. 39** shows how beams from one LED **106** arrive at two PDs **205** and **206** as a result of lenses **405** - **407.** Shown in **FIG. 39** are beam **320** from LED **106** to PD **205** and beam **321** from LED **106** to PD **206. FIG. 40** shows beams **320** and **321** inside an entire light guide frame **410** surrounded by LEDs **102** - **103** and PDs **202** - **203.**

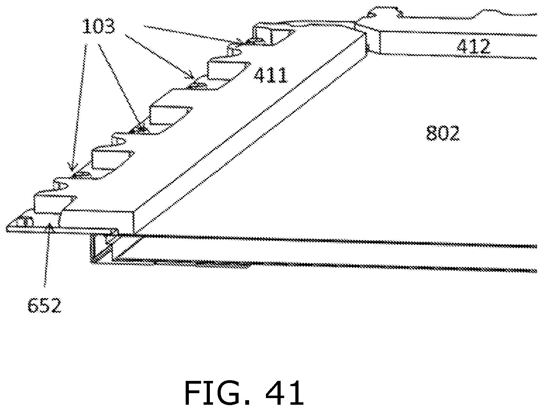

Reference is made to **FIGS. 41** - **43,** which are illustrations of an arrangement of components, light guides, PCB and screen in a device. **FIG. 41** shows a portion of a touch screen assembly. Two light guides **411** and **412** are placed along two perpendicular edges of screen **802.** An array of LEDs **103** is arranged on PCB **652** behind light guide **411.**

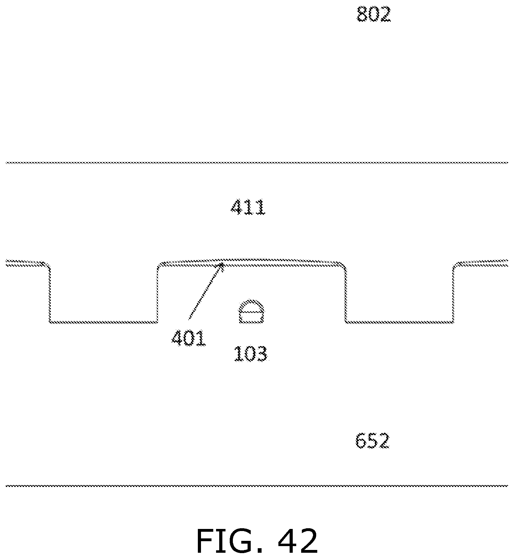

**FIG. 42** shows a view from above of a portion of the arrangement shown in **FIG. 41. FIG. 42** shows one LED **103** facing light guide **411;** PCB **652** and screen **802.** Curved inner lens surface **401** faces LED **103.**

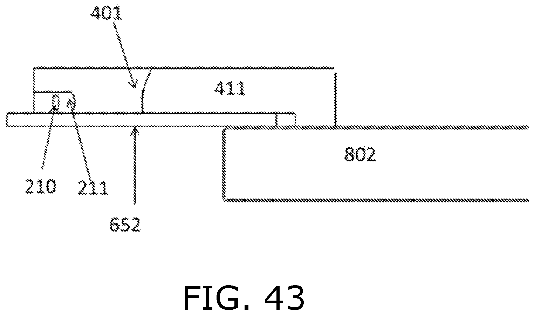

**FIG. 43** shows a side cutaway view of a portion of the arrangement shown in **FIG. 41,** except that LED **103** is replaced by PD **210** encased in PD shell **211. FIG. 43** also shows light guide **411** having inner surface **401,** PCB **652** and screen **802.** In the cross-section view shown in **FIG. 43** inner surface **401** is curved along its height in order to collimate light along the height of lens **411,** i.e., perpendicular to the screen. This cross-section is through the optical axis, which is the center of PD **201,** and the curve seen is for the forward 0° field illustrated in **FIGS. 36** - **38.** If the cross-section were done in another plane, the curvature would be different to suit the corresponding field angle.

A second option is a light guide featuring both refractive elements and reflective elements. This light guide enables utilizing light emitted from the LED at more extreme angles than lenses that use only refraction, thereby gathering more of the emitted LED light. This light guide allows for a wider pitch within a limited space in the light direction, i.e., a more extreme ratio between the pitch and the depth/length from the chip to the end of the light guide.

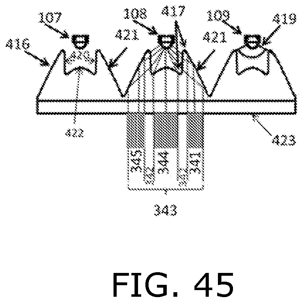

Reference is made to **FIGS. 44** and **45,** which are simplified illustrations of a light guide. **FIG. 44** shows a light guide **416,** three light emitters **107** - **109** and the "*pitch*" and "*depth*" mentioned above. **FIG. 45** shows a compound lens, including light guide **416** and three LEDs **107** - **109.** Light guide **416** has three identical sections, one opposite each of the LEDs. Similar compound lenses are used for the PDs. Light guide **416** has an exceptionally wide viewing angle **419** as a result of refractive surfaces **420** and reflective surfaces **421.** Light directed forward from the emitter is not reflected;

it is collimated by collimating optical surface **422.**

Thus three portions of the output light field **343** are: central, collimated portion **344,** and left and right collimated portions **345** and **341.** Two gaps **342** in output light field **343** are shown. These are caused by radii **417** joining refractive surface **420** to refractive surface **422** and to reflective surface **421,** respectively. Several methods are provided for covering gaps **342,** using either microstructures, air gaps in the light guide, or a combination thereof. The air gap solutions close gaps **342,** whereas the microstructure configurations reduce the severity of gaps **342,** but do not remove them entirely.

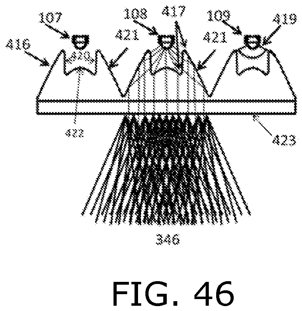

Reference is made to **FIG. 46,** which is a simplified illustration of how microstructures reduce the problem of gaps in the light field, in the light guide of **FIGS. 44** and **45. FIG. 46** shows the effect of light-scattering micro-structures applied to outer lens surface **423.** Gaps **342** in light field **341** illustrated in **FIG. 45** are now covered by scattered beams **346.**

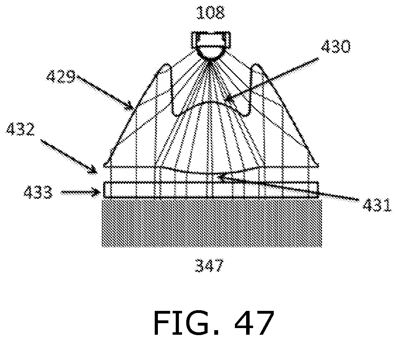

Another method of covering gaps **342** uses an air-gap in the light guide. Two variations are provided. Reference is made to **FIGS. 47 - 49,** which are simplified illustrations of light guides. **FIG. 47** shows light guide **429** separated by air gap **432** from lens **433.** Lens **433** may be a flat transparent sheet used to provide a straight border to the touch area. Light guide **429** differs from light guide **416** mainly in its central collimating portion. In light guide **416** the forward-directed light is collimated by a single refraction at entry surface **422,** whereas in light guide **429,** this light is collimated by two refractions: at entry surface **430** and at exit surface **431.** The refraction at entry surface **430** directs the light such that when it exits surface **431,** it covers the gap in the light field, as illustrated by light field **347.**

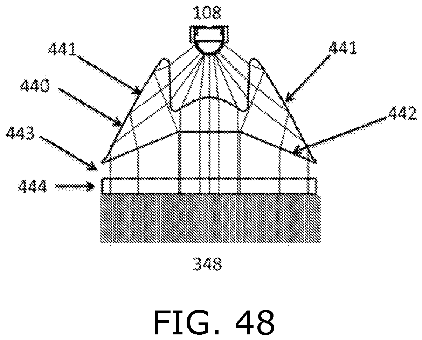

**FIG. 48** shows an alternative light guide **440** that covers gaps **432** by directing light in the left and right portions of light guide **440,** instead of the in the central portion. Light guide **440** is separated by air gap **443** from lens **444.** Lens **444** may be a flat transparent sheet used to provide a straight border to the touch area, as lens **433** in **FIG. 47.** Light guide **440** differs from light guide **416** mainly in its left and right reflecting and refracting portions. In light guide **416** the wide-angle light is collimated by a refraction at entry surface **420** followed by a reflection at surface **421,** whereas in light guide **440,** one further refraction is required at exit surface **442.** The reflection at surface **441** directs the light such that when it exits surface **432,** it covers the gap in the light field, as illustrated by light field **348.**

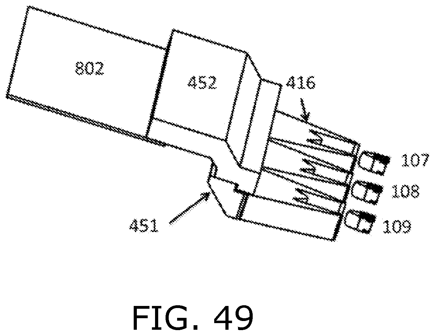

Light guides **416, 429** and **440** all collimate light in a first dimension, parallel to the screen surface. A curved mirror is used to collimate the light beams in the dimension incident to the screen surface. **FIG. 49** shows LEDs **107 - 109,** light guide **416** for collimating light from these LEDs in a first direction, and curved mirror **451** for collimating these light beams in a second direction. A second light guide **452** directs these beams across screen **802.**

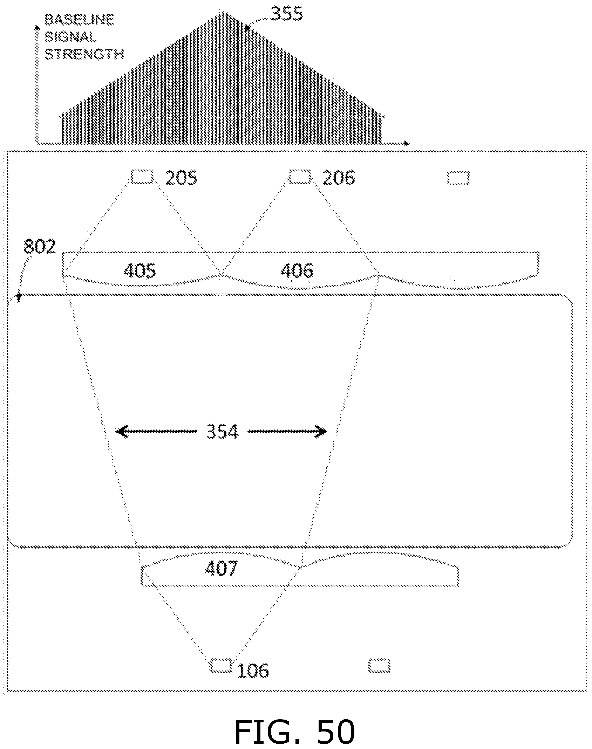

For some methods it is useful that the beam intensity varies linearly along the width of light field **343.** Reference is made to **FIG. 50,** which is a simplified illustration of a light intensity distribution across the width of a wide light beam. **FIG. 50** shows linear light intensity distribution **355** across the width of wide beam **354.** The other elements in **FIG. 50** are screen **802,** LED **106** and its associated lens **407,** PDs **205** and **206,** and their associated lenses **405, 406.** Reference is made to U.S. Publication No. 2011/0163998 A1 entitled OPTICAL TOUCH SCREEN SYSTEMS USING REFLECTED LIGHT, which explains how a linear light intensity distribution is used to determine a touch location inside a wide beam. However, due to the reflection at the outer edges of light guides **416, 429** and **440,** the outer sections of light field **343** are inverted, as will be explained with reference to **FIG. 51.**

Reference is made to **FIG. 51,** which is a simplified illustration comparing light intensity distribution across the width of an un-reflected wide light beam with that of a wide beam that has passed through the light guide of **FIGS. 44** and **45. FIG. 51** compares the light intensity distributions from a first emitter **106** with those from a second emitter **108** passing through light guide **416.** The linear distribution **356** from emitter **106** is rearranged by light guide **416** into three distributions **357 - 359.** Distributions **358** and **359** are directionally different than their neighboring portions of distribution **357.** The microstructures discussed in reference to **FIG. 46** ameliorate this problem. However, an alternative light guide avoids this problem entirely while still capturing a wide viewing angle.

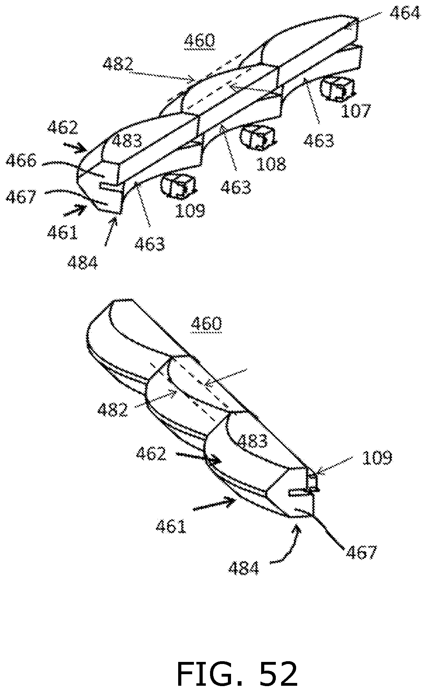

Reference is made to **FIGS. 52 - 54,** which are simplified illustrations of a light guide, in accordance with an embodiment of the present invention. **FIG. 52** shows three lenses **460** of a light guide that also captures a wide viewing angle, and has the added advantages of no gaps in the light field and the light field can be easily shaped, e.g., to provide linear light intensity distributions as discussed hereinabove with reference to **FIGS. 50** and **51.** Lens **460** uses refraction and reflection to capture and collimate light across a wide viewing angle. Each lens in **FIG. 52** is opposite respective diode **107 - 109.** This lens features an upper portion **466** and a lower portion **467.** Lower portion **467** features refractive surface **463** facing the lens's respective diode and curved internally reflective surface **461** cut horizontally by a bottom horizontal plane **484.** Upper portion **462** features refractive surface **464** above the lens's respective diode and curved internally reflective surface **462** cut horizontally by a top horizontal plane **483.**

In some embodiments, refractive surface **463** is a single-curved (*x*-dimension) surface. In other embodiments the surface facing the diode is straight. Internally reflective surfaces **461** and **462** further collimate the light in both the *x*- and *y*- directions. When diodes **107 - 109** are emitters, collimated light exits lens **460** through flat exit surface **464.** When diodes **107 - 109** are receivers, collimated light enters lens **460** through flat exit surface **464.** By cutting reflective surfaces **461** and **462** horizontally with horizontal planes **483** and **484,** instead of vertically, the lens has a lower height, as explained above.

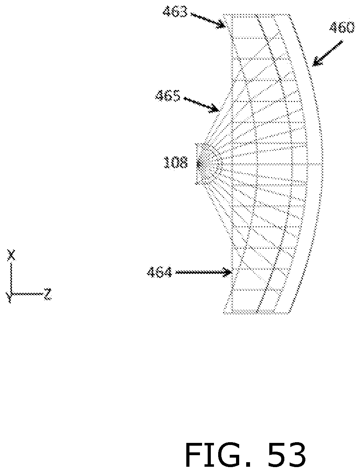

**FIG. 53** shows a view from above of lens **460.** Diode **108** is either an LED or PD. **FIG. 53** shows curved entry surface **463** and flat exit surface **464** of lens **460.** Light beams **465** are refracted at entry surface **463.**

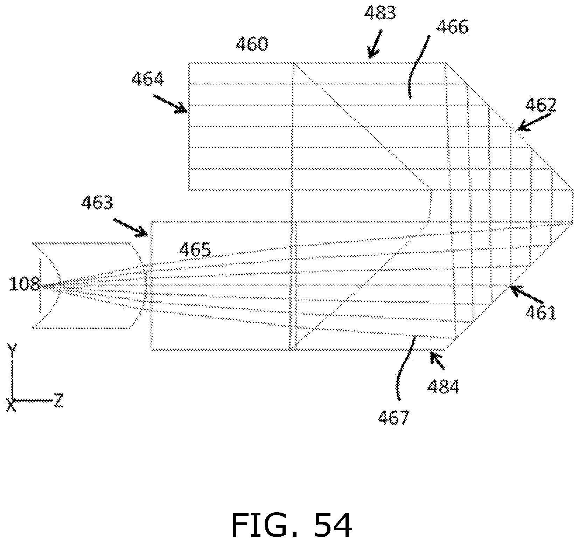

**FIG. 54** shows a cutaway view from the side of light guide **460. FIG. 54** shows how reflective surfaces **461** and **462** collimate light beams **465** in the *y* and *x* directions. Surfaces **461** and **462** are curved in both the *x* and *y* directions to collimate the light in both these directions, and are cut horizontally by respective horizontal planes **484** and **483.** Surfaces **461** and **462** are vertically aligned mirror images of each other. This ensures that any light reflected by one of these surfaces is also reflected by the other surface. Entry surface **463** and exit surface **464** of lens **460** are also shown.

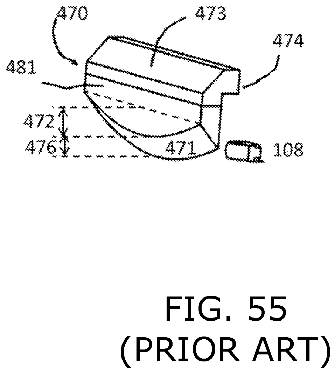

Lens **460** is an extremely fast lens suitable for applications requiring much light, yet is extremely compact. For example, in prior art systems in which a diode is placed underneath the screen, light guides for collimating light in the *x*-direction, i.e., parallel to the screen surface, employ a curved reflective surface that receives the light traveling downward, perpendicular to the *x*-direction. In prior art lenses, a double-curved reflector is cut vertically by a rear vertical plane of the light guide. The advantages of lens **460** are evident when it is compared to a prior art light guide illustrated in **FIG. 55.**

Reference is made to **FIG. 55,** which is a prior art illustration of a light guide. **FIG. 55** shows diode **108** opposite a prior art collimating light guide **470** having a single reflector curved in two-dimensions for collimating light from LED **108.** The reflector has a height **478** which is the sum of two heights: (a) height **476** which is determined by the height of exit surface **474.** This is the height of the incoming light channel which must be maintained as the light travels through light guide **470;** and (b) height **472** of the parabola resulting from the fact that double-curved reflector **471** is intersected by backplane **481.** The magnitude of height **472** depends on the width of the pitch between neighboring LEDs and the proximity of LED **108** to light wide **470.** Namely, a wider viewing angle requires a greater parabolic height.

By contrast, the minimum height of lens **460** of **FIGS. 52, 53, 54** and **56,** is limited only to twice the height of the incoming light channel, i.e., the sum of the heights of surfaces **463** and **464.** The parabola of **FIG. 55** is rotated from the vertical plane to the horizontal plane in lens **460.** Therefore height **472** in light guide **470** is transposed into depth **482** in the horizontal plane in lens **460** as illustrated in **FIG. 52.**

Moreover, because lens **460** has two double-curved reflectors it is more powerful, nearby twice as powerful, as light guide **470.** Thus, for wide viewing angles the parabolic depth required in lens **460** is substantially less than the parabolic height required in light guide **470.**

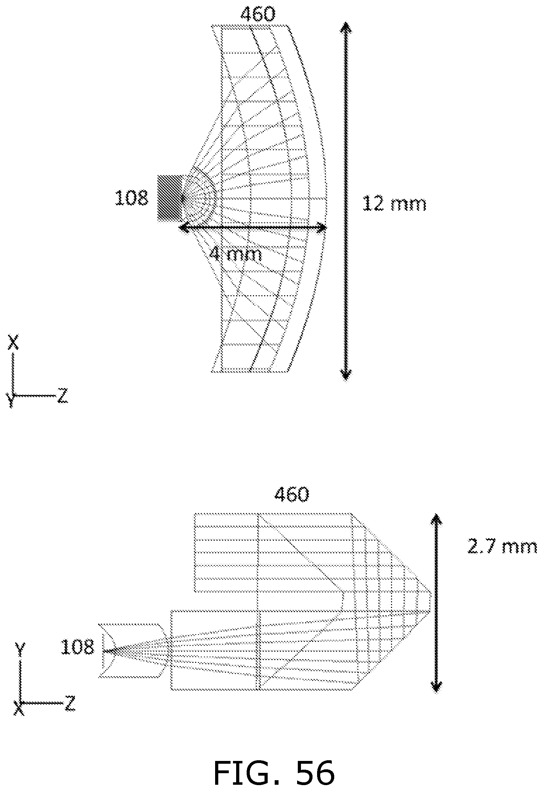

Reference is made to **FIG. 56,** which is a simplified illustration showing example dimensions of lens **460** of **FIGS. 52, 53, 54,** in accordance with an embodiment of the present invention. Lens **460** can be made less extreme with a flat entry surface and longer focal length. The distance between neighboring lenses can also be increased if needed. Unusual curves used in lens **460** may result in extreme vignetting, which can be compensated with microstructures at exit surface **464.**

**Edge Sweep Detection**

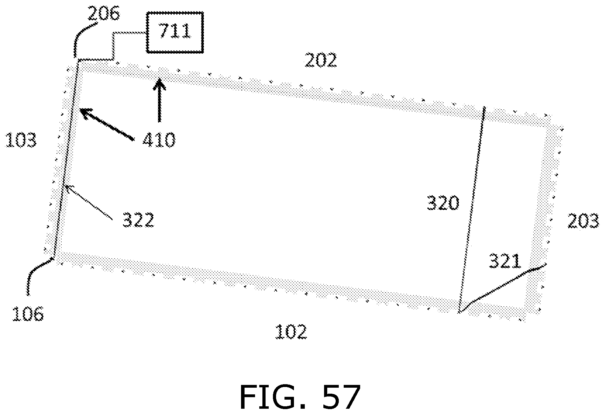

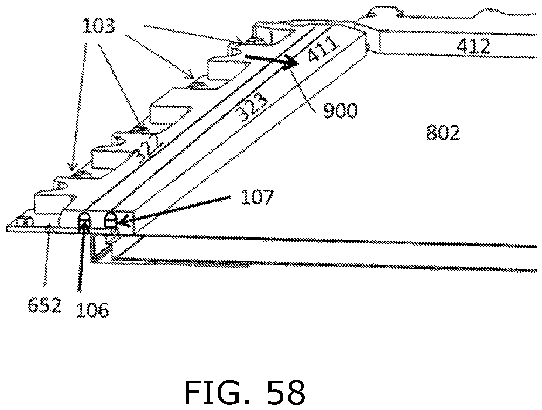

Reference is made to **FIGS. 57** and **58,** which are simplified illustrations of a light guide arrangement for detecting touches and sweep gestures performed upon the light guide. **FIG. 57** shows an optical touch screen with an LED-PD pair for detecting an object touching the left edge of a light guide frame. **FIG. 57** shows the optical touch screen of **FIG. 40** where, in addition to the LEDs and PDs for detecting touch locations on the screen, an additional LED - PD pair **106** - **206** is added for detecting an object touching the left edge of light guide frame **410.** LED **106** projects light beam **322** into the left border of light guide frame **410** where light beam **322** is captured inside a slab portion of frame **410** by total internal reflection as it travels through. At the opposite end of this border, light beam **322** is detected by light detector **206.** The upper surface of the slab is exposed to touch by an object from outside. Such a touch absorbs a portion of light beam **322** before it arrives at detector **206,** resulting in reduced detection at detector **206.** Calculating unit **711** connected to detector **206** determines that an object is touching the upper surface of the slab portion through which beam **322** passes based on this reduced light detection.

In certain examples more than one LED - PD pair is provided in order to detect movement of the object across the upper surface in a direction perpendicular to beam **322.** This enables the computer to determine that a sweep gesture across the border is being performed, corresponding to the sweep gesture employed by Windows 8 to open the charms bar or to toggle between different running applications. **FIG. 58** shows two emitters **106, 107** that emit beams **322, 323,** respectively, through light guide **411,** with each beam being detected by a corresponding detector (not shown) at the opposite end of each beam. **FIG. 58** shows emitters **106** and **107** that emit respective beams **322** and **323** through light guide **411.** These beams are confined inside light guide **411** by total internal reflection. Each beam is detected by a corresponding detector (not shown) at the opposite end of each beam. A sweep gesture indicated by arrow **900** across light guide **411** is detected as a result of portions of internally reflected beams **322** and **323** being absorbed by a finger performing the gesture as the finger comes into contact with each beam. Furthermore, in certain examples, each border of frame **410** (in **FIG. 57**) has multiple LED - PD pairs for detecting these Windows 8 edge-related sweep gestures along each edge of the screen.

Reference is made to assignee's U.S. Patent Nos. 8,553,014, and 9,411,430 , both entitled OPTICAL TOUCH SCREEN USING TOTAL INTERNAL REFLECTION, which describe how to project light beam **322** from emitter **106** into a light guide slab and determine location of an object touching the slab's upper surface based on outputs of an opposite detector **206.**

**Reduced-Component Flexible Touch Screens**

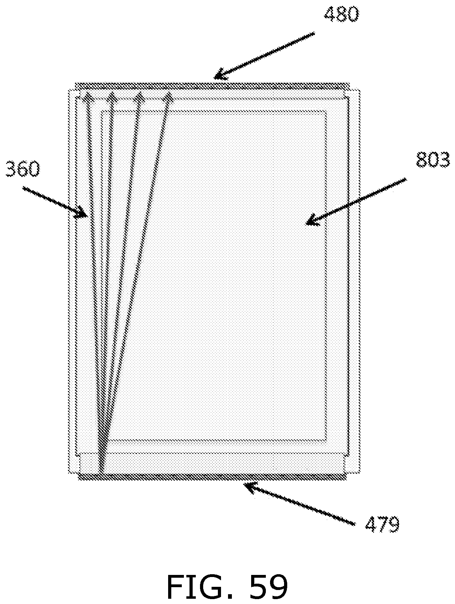

Discussion now turns to devices wherein a touchscreen has light guides along only two edges of the screen. Reference is made to **FIG. 59,** which is a simplified illustration of a touch screen having a row of emitters along the bottom edge of the screen and a row of receivers along the top edge of the screen. **FIG. 59** shows screen **803,** emitter light guide **479,** detector light guide **480** and light beams **360.**

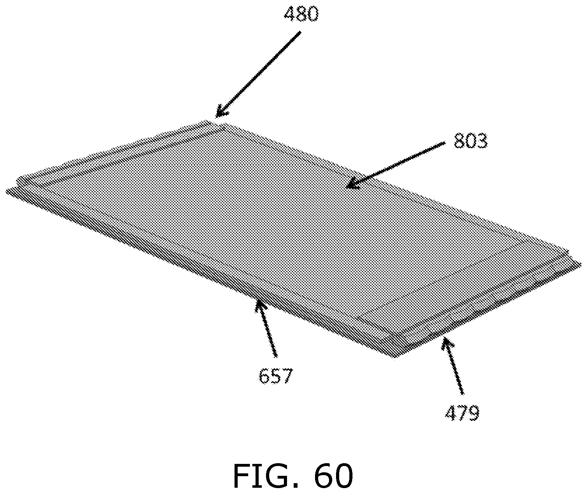

Reference is made to **FIG. 60,** which is a simplified illustration of the touchscreen of **FIG. 59. FIG. 60** shows screen **803,** emitter light guide **479,** detector light guide **480** and PCB **657.**

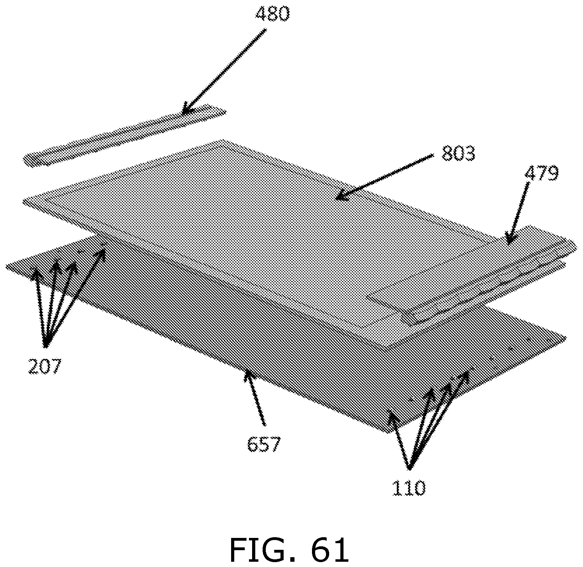

Reference is made to **FIG. 61,** which is an exploded view of the touchscreen of **FIG. 5.** This view exposes LEDs **110** and PDs **207** mounted on PCB **657** underneath their respective light guides.

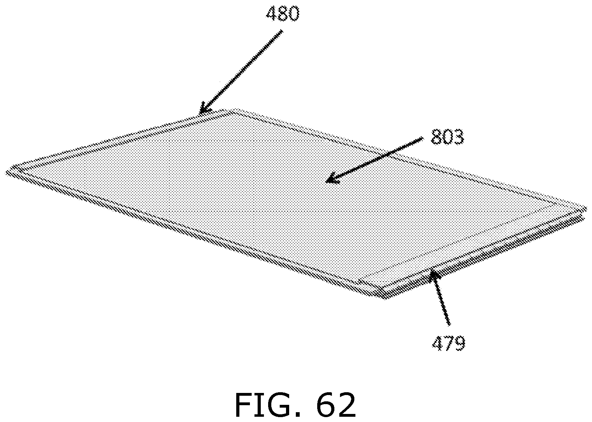

In another device, PCB **657** is replaced by two PCB strips. In this regard reference is made to **FIG. 62,** which is a simplified illustration of a touchscreen having a row of emitters along the bottom edge of the screen mounted on a first thin strip PCB and a row of receivers among the top edge of the screen mounted on a second thin strip PCB. **FIG. 62** shows a touchscreen with screen **803,** emitter light guide **479** and detector light guide **480.**

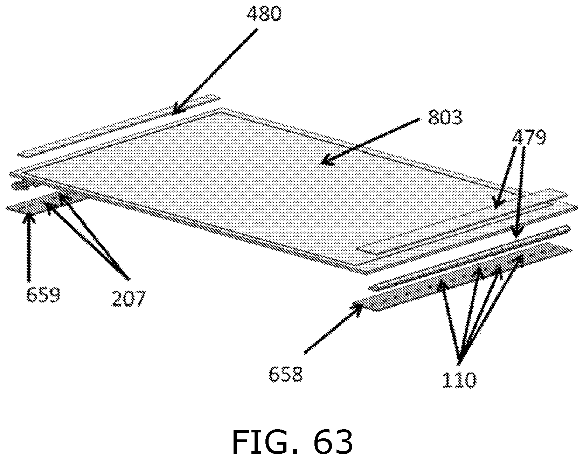

Reference is made to **FIG. 63,** which is an exploded view of the touchscreen of **FIG. 62.** Thus **FIG. 63** shows two PCB strips **658** and **659** on which LEDs **110** and PDs **207** are mounted, respectively. As shown in **FIG. 63,** light guides **479** and **480** are each made up of two parts: one above screen **803** and the other below screen **803.**

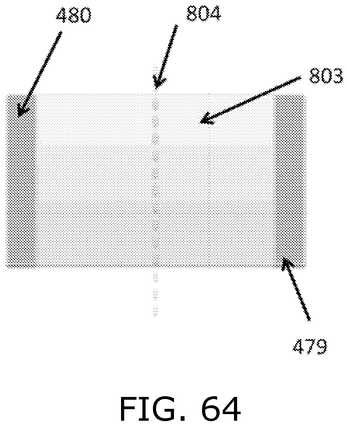

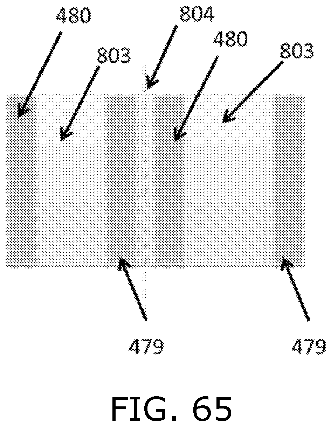

These touchscreens having light guides along only two edges of the screen enable providing optical touch functionality on a flexible screen. In this regard reference is made to **FIG. 64,** which is a simplified illustration of a foldable touchscreen. **FIG. 64** shows foldable screen **803** having emitter light guide **479** along its right edge and detector light guide **480** along its left edge. Crease **804** down the middle of screen **803** indicates where the screen can be folded in half for compact storage. The unfolded screen is touch-sensitive as long as the beams projected from emitter light guide **479** arrive at detector light guide **480.** Reference is made to **FIG. 65** illustrating an example in which both the left and right halves of the screen have respective pairs of emitter and detector light guides **479** and **480.** In this case, even when the screen is folded along crease **804,** each half of the screen is touch sensitive. For example, when the screen of **FIG. 65** is folded to roughly a 90° angle so that half of the screen lies flat on a table and the other half stands upright facing the user, in the manner of an open laptop both halves remain touch sensitive.

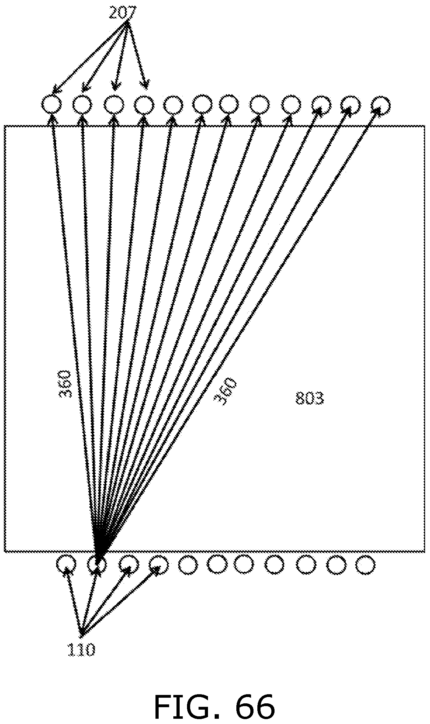

The determination of a touch location is described with reference to **FIGS. 66** - **69.** Reference is made to **FIG. 66,** which is a simplified illustration of light beams from one emitter reaching all of the detectors. **FIG. 66** shows screen **803** with a row of LEDs **110** along its bottom edge and a row of PDs **207** along its top edge. Light beams **360** from one of the LEDs arrive at all of the PDs.

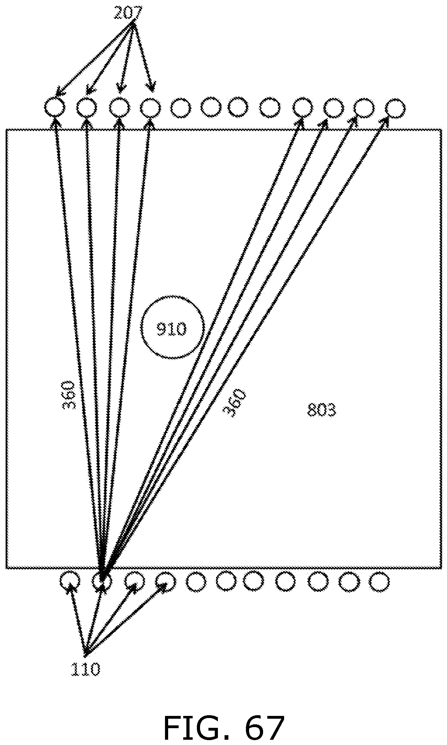

Reference is made to **FIG. 67,** which is a simplified illustration showing which beams from **FIG. 66** are blocked by an object touching the center of the screen. **FIG. 67** shows what happens to beams **360** when an object **910** is placed on the screen. Thus, comparing **FIGS. 67** and **66** it is evident that some of beams **360** are blocked by object **910** and their absence is detected at respective ones of PDs **207.**

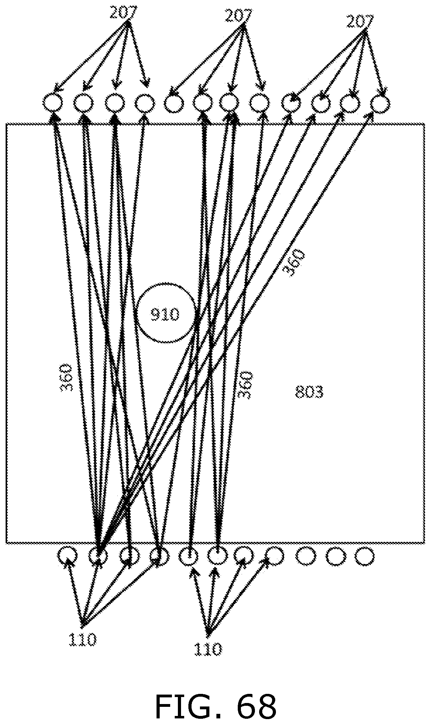

Reference is made to **FIG. 68,** which is a simplified illustration showing additional beams from other emitters that are not blocked by the object of **FIG. 67. FIG. 68** shows unblocked beams **360** from several of the LEDs.

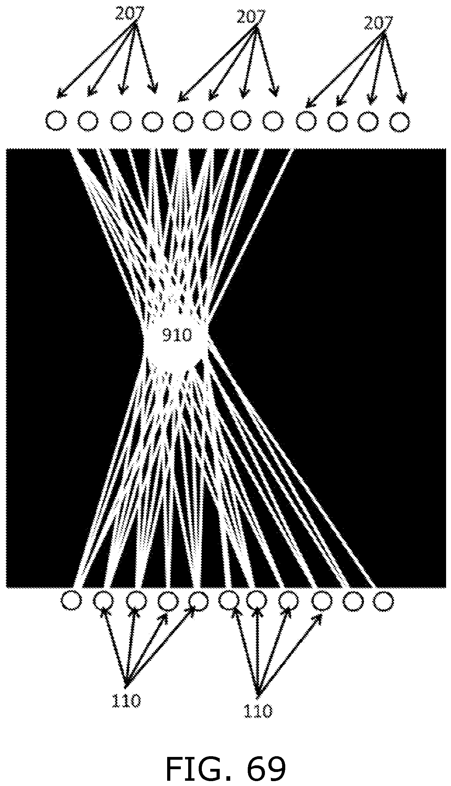

Reference is made to **FIG. 69,** which is a simplified illustration showing all of the beams blocked by object **910** of **FIG. 67.** The area around which the intersections of these blocked beams are concentrated corresponds to the location of the object **910** on the screen. The two dimensional location of the object is thus determined. Thus, 2D coordinates of a location of a touch object correspond to the intersections of the blocked beams. Several methods for determining a touch coordinate based on a configuration of many intersecting beams have been described hereinabove with regard to avoiding ghosting. Some methods process blocked beams and others process non-blocked beams.

In these examples the resolution of the x-coordinate, namely, the coordinate along the length of light guides **479** and **480,** is higher than the resolution of the y-coordinate. Therefore, in some examples the touchscreen driver software distinguishes between situations of a single touch and situations of dual touch, or multi-touch. In particular, multi-touch gestures such as pinch and spread gestures are determined based only on the x-coordinates of the touches. Whereas when only one object is touching the screen the system determines both the x-coordinate and the y-coordinate of the touch object.

Furthermore, x-coordinate detection extends the entire width of the screen, i.e., to the edges of light guides **479** and **480,** whereas y-coordinate detection is limited to an inscribed rectangle within the screen in order to provide the multiple diagonal intersecting beams required in order to determine the y-coordinate.

**Circular Touch Panel**

Certain circular touch panels target small touch pads and watches, and are roughly 40 mm in diameter and support multi-touch. In certain optical touch screen implementations the channel between an LED and a PD consists of a wide beam of light, but for a round touch surface narrow ray-like beams from LED to PD are used. Thus, these examples are relatively small and use tightly spaced components. This enables good light coverage even though the individual light fields are narrow.

Component placement

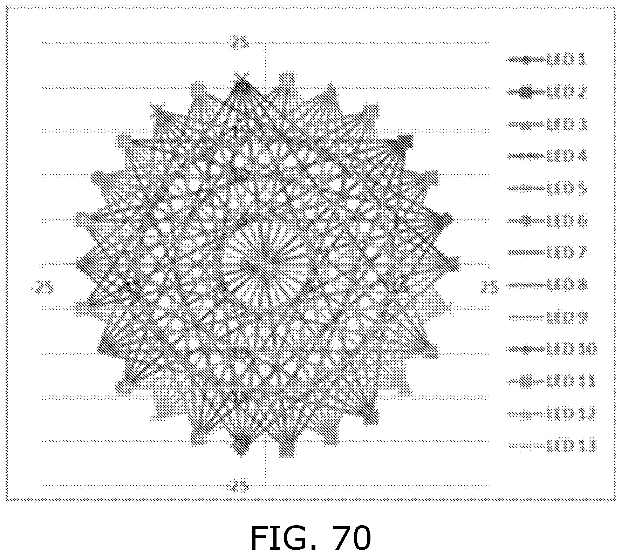

Reference is made to **FIGS. 70 - 73,** which are illustrations of alternative LED and PD layouts for a circular touch surface. The LEDs and PDs are positioned so that the light coverage of the touch area is maximized, i.e., the holes in the ray grid that covers the touch area are as small as possible.
Two different setup geometries are used: namely,

(i) alternating LED/PD, whereby every LED is positioned between two PDs and vice versa; and
(ii) the LEDs and PDs are positioned on separate semicircles.

(i) Alternating LED/PD

**FIG. 70** shows an arrangement of alternating LEDs and PDs with an odd number of LEDs. In this case, each LED is diametrically mirrored by a PD. This kind of radial symmetry generates a large circle in the center of the touch area, mimicking a spoked wheel.
Within this circle, there is a lack of positional accuracy. When blocking one or more rays on one side of the center, there will always be another position diametrically opposite where the same rays can be blocked, thus generating the same signals. Therefore, within this circle it is not possible to determine on which side of the center a touch is located.

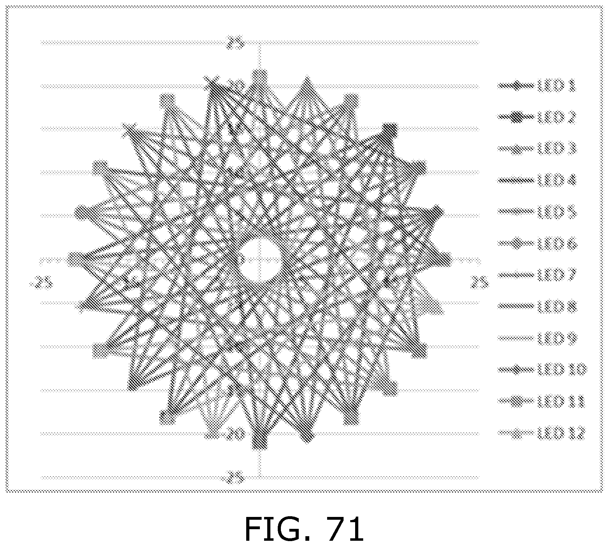

**FIG. 71** shows an arrangement of alternating LEDs and PDs with an even number of LEDs. In this case, each LED is diametrically mirrored by another LED. This kind of radial symmetry generates a circular hole in the ray pattern at the center of the touch area. No touch information can be generated within this circle. However, it is noted that the problematic circle is smaller in this case.

(ii) LEDs and PDs positioned on separate semicircles

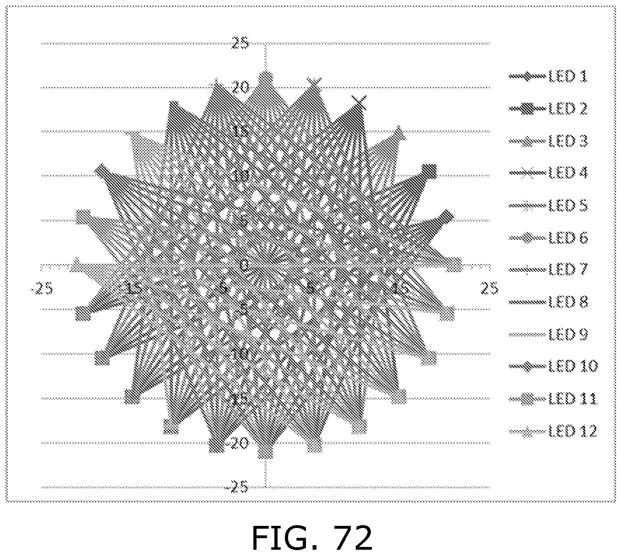

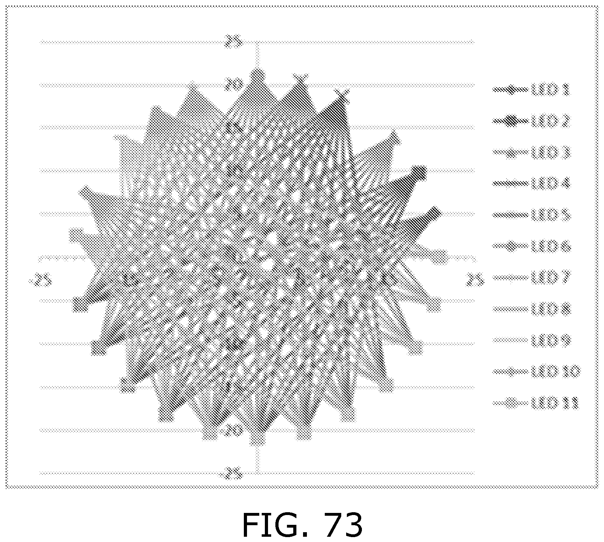

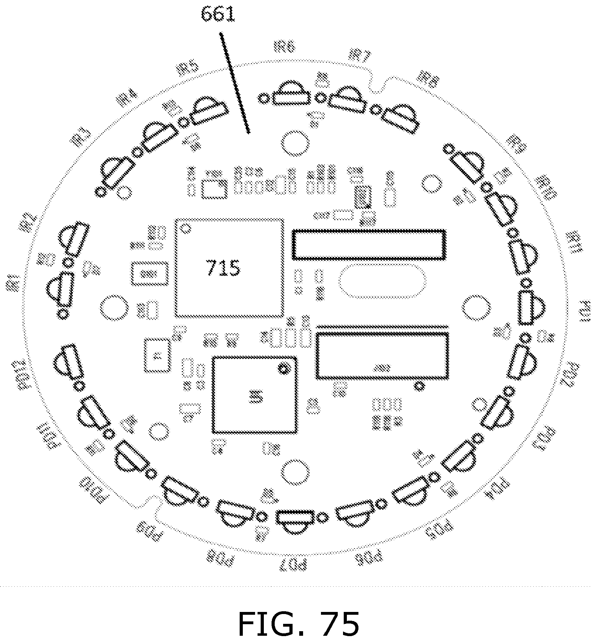

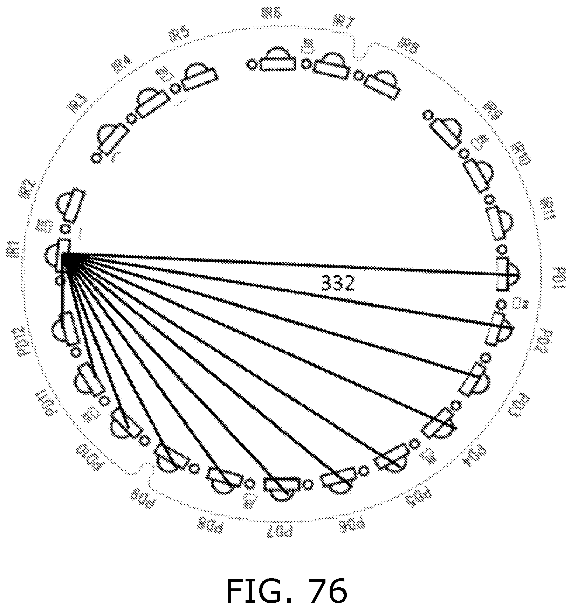

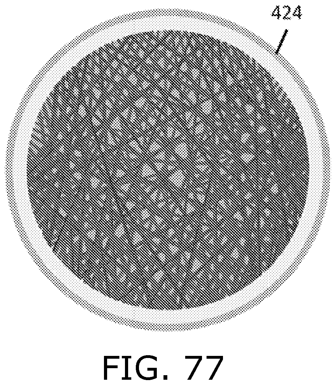

Breaking the radial symmetry associated with alternating components is achieved by splitting the circle in half and placing all of the LEDs on one side and the PDs on the other side, where the LEDs and PDs are evenly distributed. **FIG. 72** shows this configuration. The PDs are arranged along the bottom semi-circle and the LEDs are arranged along the upper semi-circle. Having the same number of LEDs and PDs provides a combination of the two previous layouts. There is still a central area with poor positional accuracy. The result is similar for an odd number of LEDs and PDs as each LED is now always mirrored by a PD. This setup still has a left-right symmetry associated with it. The ray pattern is improved by eliminating this symmetry. This is done, *inter alia,* by slightly altering the LED pitch and introducing an extra spacing of half a pitch between every third LED. This also decreases the number of LEDs. This arrangement of LEDs and PDs is illustrated in **FIGS. 75** and **76.** The resulting pattern of detection beams is shown in **FIGS. 73** and **77.**

Light Guide Design

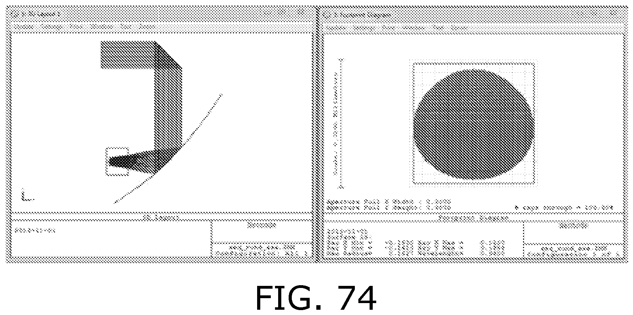

Reference is made to **FIG. 74,** which is an illustration of a light guide for a circular touch surface. The left pane in **FIG. 74** is a cross-section of the light guide. The many-to-many mapping of LEDs to PDs requires a large angular spread of light, which is provided by the LEDs and PDs. A small focusing effect in height is introduced in the folding mirror closest to the components, as illustrated by the arc along the bottom right corner of the cross-section shown in the left pane in **FIG. 74.** Other than that, the plastic light guide serves as a redirecting component to get the light across the touch area with an arrangement of mirror surfaces using total internal reflection. The curved mirror is slightly defocussed, roughly filling its corresponding diode. No draft angles are present when using a milled light guide. A consequence of the straight bezel is that the unit works when fully submerged in water, provided that it is watertight. The cross section shown in the left pane of **FIG. 74** is rotated 360° to create a circularly symmetric light guide. The bezel height is 1 mm and the touch area diameter is 40 mm.
Reference is made to **FIG. 75**, which is an illustration of a PCB layout for a circular touch surface. **FIG. 75** shows different numbers of LEDs and PDs; namely, 11 LEDs **IR1** - **IR11** along the upper half of PCB **661**, and 12 PDs **PD1** - **PD12** along the bottom half of PCB **661**. Whereas the PDs are evenly spaced, with an angular displacement of 15° between each detector and its neighbor, the LEDs are divided into four groups with an angular displacement of 14° within each group and 21° (1.5 * 14°) between the groups.

In the interior of PCB **661** a plurality of electronic components is provided for the proper function of the touch sensitive surface, inter alia, controller **715**, which selectively activates and deactivates the LEDs and PDs.

Reference is made to **FIG. 76**, which is an illustration of light beams emitted by one LED detected by a plurality of PDs surrounding a circular touch surface. **FIG. 76** shows a range of detected beams **332** emitted by LED **IR1**. As explained above, tables measuring detected intensities of non-blocked beams are prepared in order to examine which beams are not sufficiently detectable and in order to determine a threshold value, e.g., half of the expected intensity of the non-blocked beam, for the usable beams. Thus, in practice, not all beams **332** are used to detect touches by the system. For example, the **IR1-PD12** beam is not used as it is detected even when the entire circular input surface is covered by an opaque object.

Reference is made to **FIG. 77**, which is an illustration of a network of intersecting light beams used in a circular touch surface. **FIG. 77** shows all of the used beams encircled by light guide **424** in a circular touch system.

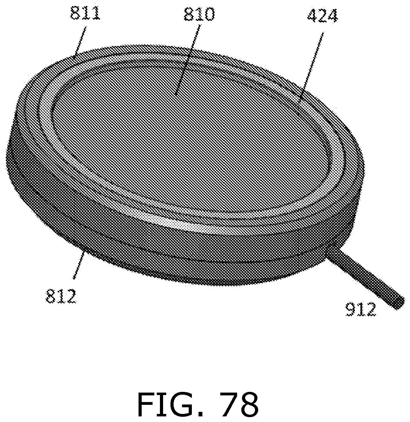

Reference is made to **FIG. 78**, which is a simplified illustration of a circular touch surface sensor. **FIG. 78** shows a 3D model of a circular touch panel. A touch plate **810** is surrounded by a light guide **424.** The light beams **332**, shown in **FIGS. 76** and **77**, are projected through light guide **424**. Also shown in **FIG. 78** are top and bottom covers **811** and **812** and a connecting wire **912** for a haptic vibrator explained below.

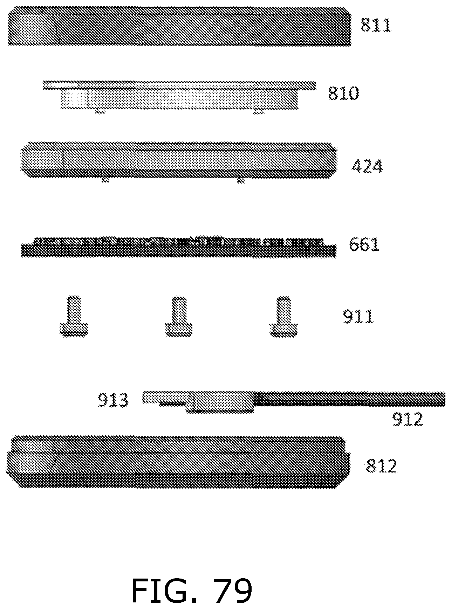

Reference is made to **FIG. 79**, which is an illustration of the components used to assemble a circular touch surface. **FIG. 79** shows the main components in an exemplary circular touch sensor, namely, front cover **811**, back cover **812**, touch plate **810**, light guide **424**, PCB **661**, screws **911**, haptic vibrator **913** and its cable **912.**

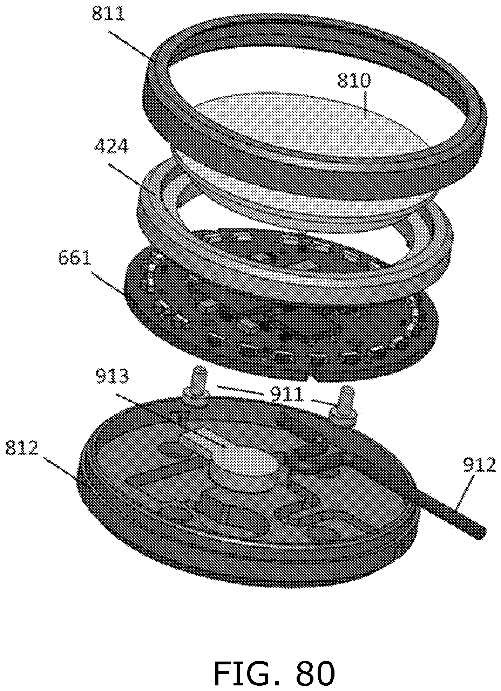

Reference is made to **FIG. 80**, which is an exploded view of the circular touch surface of **FIG. 78.** Front and back covers **811**, **812** encase touch plate **810**, light guide **424** and PCB **661**. Also shown are screws **911**, haptic vibrator **913** and associated cable **912** that connects the device to a host system. Haptic vibrator **913** provides tactile sensory feedback through touch plate **810** in response to touch inputs detected thereon.

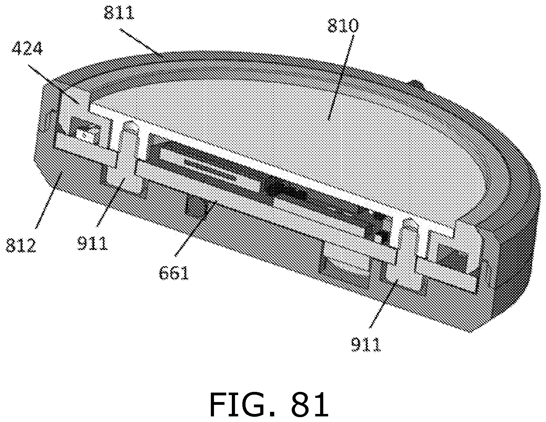

Reference is made to **FIG. 81**, which is a cutaway view of the circular touch surface of **FIG. 78.** Like reference numerals in **FIGS. 80** and **81** indicate the same elements. The upper rim of light guide **424** extends above touch plate **810** forming a bezel.

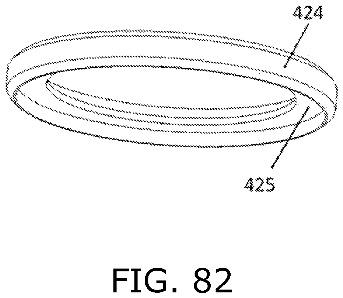

Reference is made to **FIG. 82**, which is a simplified illustration of a light guide for the circular touch surface of **FIG. 78. FIG. 82** shows light guide **424** with two reflective surfaces for redirecting the light beams. A light shield **425** along the inner perimeter of circular light guide **424** prevents stray light from above from hitting the light detectors.

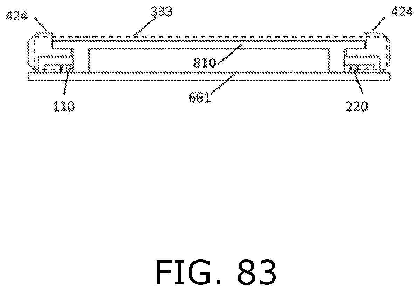

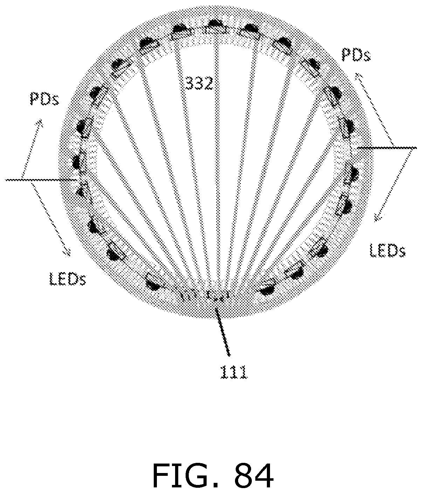

Reference is made to **FIGS. 83** and **84**, which illustrations of paths of light beams used in a circular touch surface. **FIG. 83** shows the reflective properties of light guide **424**. LED **110** and PD **220** are shown facing outward of circular light guide **424**. Light beam **333** from LED **110** is projected outward into light guide **424.** Two reflective facets redirect beam **333** over and across touch plate **810**. Similar reflective facets at the opposite edge of plate **810** redirect beam **333** onto PD **220**. Light guide **424** is optimized to spread the light such that each LED has detectable beams arriving at all, or at least at many, of the PDs.

**FIG. 84** shows beams **332** from LED **111**, at the center of the arc of emitters, projected onto all of the PDs. In **FIG. 84**, the upper half of the circular touch area is lined with 12 PDs, and the lower half of the circular touch area is lined with 11 LEDs. The multi-tiered arrangement of LEDs, whereby groups of LEDs have a different angular displacement than neighboring LEDs within a group is described above and illustrated in **FIGS. 75** and **76**.

In the foregoing specification, the invention has been described with reference to specific exemplary embodiments thereof. It will, however, be evident that various modifications and changes may be made to the specific exemplary embodiments. Accordingly, the specification and drawings are to be regarded in an illustrative rather than a restrictive sense.

**Claims**

**1.** A lens (460) for use in an optical touch sensor, the optical touch sensor including a diode (108) and being used to provide touch detection for a display, the lens for placement opposite the diode, the lens having top and bottom horizontal planes (483, 484) and **characterized by**:

an upper portion (466) comprising:

an upper refractive surface (464) ; and
an upper reflector (462) adapted to be located further from the diode with respect to the upper refractive surface (464), the upper reflector being curved in two dimensions and cut horizontally by the top horizontal plane (483) of the lens; and

a lower portion (467), comprising:

a lower refractive surface (463) adapted to face the diode; and
a lower reflector (461) adapted to be located further from the diode with respect to the lower refractive surface (463), the lower reflector being curved in the two dimensions and cut horizontally by the bottom horizontal plane (484) of the lens, wherein said upper and said lower reflector are vertically aligned and mirror one other, and

wherein, when the lens is placed opposite the diode (108), non-collimated light from the diode entering said lower refractive surface (463) is reflected by said lower reflector (461) towards said upper reflector (462) and is partially collimated in the two dimensions by said lower reflector, and is further reflected by said upper reflector (462) towards said upper refractive surface (464) and further collimated in the two dimensions by said upper reflector (462).

2. The lens of claim **1**, wherein the upper and lower reflectors (461, 462) are curved so as to collimate the light they reflect in the two dimensions.

3. The lens of claim **1**, wherein said upper and lower refractive surfaces (463, 464) are not curved.

4. The lens of claim **1**, wherein said lower refractive surface (463) is a single-curved surface and said upper refractive surface (464) is not curved.


**Patentansprüche**

1. Linse (460) zur Verwendung in einem optischen Berührungssensor, wobei der optische Berührungssensor eine Diode (108) beinhaltet und dafür verwendet wird, eine Berührungserkennung für eine Anzeige bereitzustellen, wobei die Linse für das Anordnen gegenüber der Diode vorgesehen ist, wobei die Linse eine obere und eine untere horizontale Ebene (483, 484) aufweist und durch Folgendes gekennzeichnet ist:

einen oberen Abschnitt (466), der Folgendes umfasst:

eine obere Brechungsfläche (464) und
einen oberen Reflektor (462), der dafür eingerichtet ist, sich in Bezug auf die obere Brechungsfläche (464) weiter weg von der Diode zu befinden, wobei der obere Reflektor in zwei Dimensionen gekrümmt ist und horizontal von der oberen horizontalen Ebene (483) der Linse geschnitten wird, und

einen unteren Abschnitt (467), der Folgendes umfasst:

eine untere Brechungsfläche (463), die dafür eingerichtet ist, zur Diode zu weisen, und
einen unteren Reflektor (461), der dafür eingerichtet ist, sich in Bezug auf die untere Brechungsfläche (463) weiter weg von der Diode zu befinden, wobei der untere Reflektor in zwei Dimensionen gekrümmt ist und horizontal von der unteren horizontalen Ebene (484) der Linse geschnitten wird,

wobei der obere und der untere Reflektor vertikal gefluchtet sind und einander spiegeln, und
wobei, wenn die Linse gegenüber der Diode (108) angeordnet ist, nicht parallelgerichtetes Licht von der Diode, das in die untere Brechungsfläche (463) eintritt, durch den unteren Reflektor (461) hin zum oberen Reflektor (462) reflektiert wird und durch den unteren Reflektor teilweise in den zwei Dimensionen parallelgerichtet wird und ferner durch den oberen Reflektor (462) hin zur oberen Brechungsfläche (464) reflektiert wird und ferner durch den oberen Reflektor (462) in den zwei Dimensionen parallelgerichtet wird.

2. Linse nach Anspruch 1, wobei der obere und der untere Reflektor (461, 462) derart gekrümmt sind, dass sie das Licht parallelrichten, das sie in den zwei Dimensionen reflektieren.

3. Linse nach Anspruch 1, wobei die obere und die untere Brechungsfläche (463, 464) nicht gekrümmt sind.

4. Linse nach Anspruch 1, wobei die untere Brechungsfläche (463) eine einfach gekrümmte Fläche ist und die obere Brechungsfläche (464) nicht gekrümmt ist.

**Revendications**

1.  Lentille (460) pour une utilisation dans un capteur tactile optique, le capteur tactile optique comprenant une diode (108) et étant utilisé pour réaliser une détection de contact pour un affichage, la lentille étant destinée à être placée en face de la diode, la lentille ayant des plans horizontaux supérieur et inférieur (483, 484), et **caractérisée par** :

    une partie supérieure (466) comprenant :

    une surface de réfraction supérieure (464) ; et
    un réflecteur supérieur (462) conçu pour être situé plus loin de la diode par rapport à la surface de réfraction supérieure (464), le réflecteur supérieur étant incurvé dans deux dimensions et coupé horizontalement par le plan horizontal supérieur (483) de la lentille ; et

    une partie inférieure (467), comprenant :

    une surface de réfraction inférieure (463) conçue pour faire face la diode ; et
    un réflecteur inférieur (461) conçu pour être situé plus loin de la diode par rapport à la surface de réfraction inférieure (463), le réflecteur inférieur étant incurvé dans les deux dimensions et coupé horizontalement par le plan horizontal inférieur (484) de la lentille, dans laquelle lesdits réflecteurs supérieur et inférieur sont alignés verticalement et symétriques l'un de l'autre, et
    dans laquelle, lorsque la lentille est placée face à la diode (108), la lumière non collimatée provenant de la diode entrant dans ladite surface de réfraction inférieure (463) est réfléchie par ledit réflecteur inférieur (461) vers ledit réflecteur supérieur (462) et est partiellement collimatée dans les deux dimensions par ledit réflecteur inférieur, et est en outre réfléchie par ledit réflecteur supérieur (462) vers ladite surface de réfraction supérieure (464) et en outre collimatée dans les deux dimensions par ledit réflecteur supérieur (462).

2.  Lentille selon la revendication 1, dans laquelle les réflecteurs supérieur et inférieur (461, 462) sont incurvés de manière à collimater la lumière qu'ils réfléchissent dans les deux dimensions.

3.  Lentille selon la revendication 1, dans laquelle lesdites surfaces de réfraction supérieure et inférieure (463, 464) ne sont pas incurvées.

4.  Lentille selon la revendication 1, dans laquelle ladite surface de réfraction inférieure (463) est une surface à courbe unique et ladite surface de réfraction supérieure (464) n'est pas incurvée.

FIG. 1
(PRIOR ART)

FIG. 2
(PRIOR ART)

FIG. 3
(PRIOR ART)

FIG. 4
(PRIOR ART)

FIG. 5
(PRIOR ART)

FIG. 6

FIG. 7

601

Create cell grid

602

Read signals

612

603

Mark cells as blocked or not blocked

613

604

Identify clusters of connected blocked cells

701    614    705

605

Calculate position and size of touch areas

702    703    704

FIG. 8

620
Create look-up table
of beam
intersections

621
Read signals

630

622
Move along blocked
beam until a blocked
intersection is
reached

640

635
636
633
634
639
638
637

623
Recursively check
neighboring
intersections

650

636
633
641
646
647
639
642
645
643

624
Calculate position
and size of touch
areas

651
660

FIG. 9

FIG. 10

651

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

FIG. 30

FIG. 31

FIG. 32

FIG. 33

FIG. 34

664 — Determine Touch Locations Using Aligned or Shift-Aligned Emitter-Receiver Pairs

665 — Iterate over touch locations

666 — Iterate over touch location coordinates

667 — For each beam used in determining the selected coordinate, compile list of all incident beams that cover the determined touch coordinate

668 — Are any of the incident beams completely unblocked?

Yes → 669 — Remove selected touch location

No ↓

670 — Determine center of rhomboid overlap between beams

671 — Calculate weighted sum

FIG. 35

FIG. 36

0° field

30° field

45° field

60° field

# FIG. 37

FIG. 38

FIG. 39

FIG. 40

FIG. 41

802

411

401    103

652

# FIG. 42

FIG. 43

FIG. 44

FIG. 45

FIG. 46

FIG. 47

FIG. 48

FIG. 49

FIG. 50

# FIG. 51

FIG. 52

FIG. 53

FIG. 54

FIG. 55
(PRIOR ART)

FIG. 56

FIG. 57

FIG. 58

FIG. 59

FIG. 60

FIG. 61

FIG. 62

FIG. 63

FIG. 64

FIG. 65

FIG. 66

FIG. 67

FIG. 68

FIG. 69

FIG. 70

FIG. 71

FIG. 72

FIG. 73

FIG. 74

FIG. 75

FIG. 76

FIG. 77

FIG. 78

811

810

424

661

911

913
912

812

FIG. 79

FIG. 80

FIG. 81

FIG. 82

FIG. 83

## FIG. 84

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8674966 B
- US 20120188206 A1
- US 20110163998 A1

- US 8553014 B
- US 9411430 B